# EUROPÄISCHE PATENTSCHRIFT

(11) **EP 2 580 798 B1**
(45) Veröffentlichungstag und Bekanntmachung des Hinweises auf die Patenterteilung: **21.03.2018**
(21) Anmeldenummer: 11725349.2
(22) Anmeldetag: 07.06.2011
(51) Int. Cl.: H01M 8/0202, H01M 8/0247, H01M 8/04089, H01M 8/04119

(54) **BRENNSTOFFZELLE UND BRENNSTOFFZELLENSTAPEL**
FUEL CELL AND FUEL CELL STACK
PILE À COMBUSTIBLE ET EMPILEMENT DE PILES À COMBUSTIBLE

(30) Priorität: 10.06.2010 DE 102010023566
(43) Veröffentlichungstag der Anmeldung: 17.04.2013
(73) Patentinhaber: Fraunhofer-Gesellschaft zur Förderung der angewandten Forschung e.V., 80686 München (DE); Technische Universität Berlin, 10623 Berlin (DE)
(72) Erfinder: HAHN, Robert, 13156 Berlin (DE); WAGNER, Stefan, 10405 Berlin (DE); KRUMBHOLZ, Steffen, 10243 Berlin (DE); WEILAND, Matthias, 12045 Berlin (DE)
(74) Vertreter: Pfenning, Meinig & Partner mbB
(86) Internationale Anmeldenummer: PCT/EP2011/002899
(87) Internationale Veröffentlichungsnummer: WO 2011/154162

(56) Entgegenhaltungen:
- EP-A2- 1 791 204
- WO-A1-2008/153111
- WO-A1-2009/151113
- DE-A1-102007 007 704
- DE-T5-112007 000 759
- US-A1- 2006 216 568
- US-A1- 2007 202 379
- US-A1- 2008 292 927
- US-A1- 2010 104 900

## Beschreibung

Die Erfindung betrifft eine Brennstoffzelle, insbesondere eine Wasserstoff-Brennstoffzelle, sowie einen Brennstoffzellenstapel.

Brennstoffzellen dienen der Umwandlung chemischer Energie, die in einem Brennstoff gespeichert ist, in elektrische Energie. Zu diesem Zweck enthält eine solche Brennstoffzelle zwei Elektroden, eine Anode und eine Kathode, zwischen denen ein Elektrolyt angeordnet ist, der einen Ionen- (meist Protonen-) Austausch ermöglicht. Diese Elektroden sind über Stromableiter mit einem äußeren Stromkreis zur Versorgung eines elektrischen Energieverbrauchers oder mit einer weiteren Brennstoffzelle verbindbar.

Gegenstand der hier beschriebenen Erfindung sind Polymerelektrolyt-Brennstoffzellen, bei denen die Membran in Form einer protonenleitenden Polymermembran gegeben ist, wie zum Beispiel Nafion, auf deren einander gegenüberliegenden Seiten die Elektroden als katalytisch aktive Beschichtungen der Membran ausgestaltet sind. Diese Einheit bestehend aus Anode, Polymermembran und Kathode wird im Folgenden als Elektroden-Membran-Einheit bezeichnet.

Im Fall einer Wasserstoff-Brennstoffzelle wird Wasserstoff als Brennstoff an die Anode herangeführt und an dieser oxidiert. Die dabei freiwerdenden Elektroden werden mittels eines anodischen Stromableiters von der Anode in den äußeren Stromkreis (oder zu einer weiteren Brennstoffzelle) geleitet. Die Wasserstoffionen (Protonen) diffundieren durch die Membran zur Kathode der Elektroden-Membran-Einheit, an der Sauerstoff durch Elektronen reduziert wird, die (aus einem äußeren Stromkreislauf oder einer weiteren Brennstoffzelle) durch einen kathodischen Stromableiter zur Kathode geleitet werden. Zusammen mit den durch die Membran transportierten Protonen entsteht an der Kathode, welche mit einem sauerstoffhaltigen Gas, wie etwa Luft, oder reinem Sauerstoff belüftet wird, Wasser. Das Wasser sowie die bei der chemischen Reaktion freiwerdende Reaktionswärme werden aus der Brennstoffzelle abgeführt.

Zur Verbesserung der Leistungsdichte einer Brennstoffzelle wird häufig versucht, die Versorgung der Kathode mit Sauerstoff zu verbessern. Zu diesem Zweck ist es bekannt, die Kathode auf einer der Membran abgewandten Seite mit einer Gasdiffusionsschicht zu beschichten. Ferner sind für ein Betreiben einer Brennstoffzelle bei hohen Leistungsdichten aktive Belüftungssysteme mit kathodenseitigen Belüftungskanälen und Ventilatoren bekannt, vgl. US 2006/0269821 A1.

Solche Belüftungssysteme unterstützen außerdem ein Abführen der Reaktionswärme, wodurch ein Überhitzen der Brennstoffzelle verhindert wird. Die Gefahr einer Überhitzung besteht insbesondere bei Brennstoffzellenstapeln, bei denen Brennstoffzellen übereinander gestapelt sind, wodurch eine ausreichende Wärmeabfuhr erschwert sein kann. Ferner dient eine Belüftung der Kathode der Ausleitung von Wasser (bzw. Wasserdampf) aus der Brennstoffzelle, wodurch einem Fluten der Gasdiffusionsschicht mit Wasser entgegengewirkt werden soll.

Aktive Belüftungssysteme haben allgemein den Nachteil, dass sie konstruktiv aufwändig und relativ kostenintensiv sind und ein hohes Eigengewicht mit sich bringen. Solche aktiven Belüftungssysteme sind somit meistens nicht geeignet für billige, kleine und/oder leichte Anwendungen.

Ein weiteres Problem beim Betreiben einer Brennstoffzelle bei einer hohen Leistungsdichte besteht darin, dass bei einer relativ starken (aktiven oder passiven) Belüftung der Kathodenseite der Elektroden-Membran-Einheit diese zwar ausreichend mit Sauerstoff versorgt wird und auch ein Fluten der Brennstoffzelle mit Wasser verhindert werden kann, dass aber gleichzeitig die Elektrolytmembran zu stark ausgetrocknet (entwässert) werden kann. Dies ist insbesondere bei hohen Betriebstemperaturen ein Problem, bei denen sich der Sättigungsdampfdruck von Wasser erhöht und somit die relative Luftfeuchte in einer Umgebung der Membran verringert, so dass es zu einem Wasseraustrag aus der Membran bereits bei relativ geringen Membranfeuchten kommt. Bei einer zu geringen Membranfeuchte jedoch verringert sich die Ionenleitfähigkeit der Membran, wodurch die Impedanz der höht und schließlich die erreichbare Leistungsdichte der Brennstoffzelle reduziert wird.

Eine gattungsgemäße Brennstoffzelle wird beispielsweise in DE 11 2007 000 759 T5 beschrieben. Ein weiteres Beispiel einer Brennstoffzelle aus dem Stand der Technik ist in US 2008/0292927 A1 offenbart.

Es ist also die Aufgabe der vorliegenden Erfindung eine Brennstoffzelle vorzuschlagen, die die genannten Nachteile des Stands der Technik vermindert, die also mit einer hohen Leistungsdichte betreibbar ist, dabei aber konstruktiv einfach sowie möglichst kompakt, leicht und billig ist. Ferner soll ein entsprechender Brennstoffzellenstapel vorgeschlagen werden zur Lösung der genannten Aufgabe.

Diese Aufgabe wird erfindungsgemäß gelöst durch eine Brennstoffzelle gemäß dem Hauptanspruch sowie durch einen Brennstoffzellenstapel mit mindestens zwei derartigen Brennstoffzellen. Weiterentwicklungen und spezielle Ausführungsformen der Erfindung sind Gegenstände der abhängigen Ansprüche. So betrifft die Erfindung ferner ein portables Gerät sowie ein Flugzeug, die jeweils mit einem Brennstoffzellenstapel hier vorgeschlagener Art oder mit zumindest einer Brennstoffzelle hier vorgeschlagener Art ausgestattet sind.

Eine erfindungsgemäße Brennstoffzelle, die beispielsweise eine Wasserstoff-Brennstoffzelle sein kann, umfasst demnach eine Elektroden-Membran-Einheit und eine auf einer Kathodenseite der Elektroden-Membran-Einheit angeordnete Zusatzschicht, die eine Vielzahl von länglichen Belüftungslöchern zur Belüftung der Elektroden-Membran-Einheit aufweist. Die Belüftungslöcher sind in mehreren nebeneinander liegenden Reihen angeordnet und jeweils längs einer Verlaufsrichtung der Reihen orientiert. Dabei kann die Zusatzschicht direkt an der Elektroden-Membran-Einheit flächig anliegen. Es ist aber auch möglich, dass zwischen der Elektroden-Membran-Einheit und der Zusatzschicht weitere Schichten angeordnet sind, so dass aber die Elektroden-Membran-Einheit, diese weiteren Schichten sowie die Zusatzschicht flächig aneinander anliegen.

Für die Erfindung ist es entscheidend, dass eine Länge (im Folgenden häufig mit dem Buchstaben b bezeichnet) jedes dieser Belüftungslöcher mindestens dreimal, vorzugsweise mindestens fünfmal, besonders bevorzugt mindestens zehnmal so groß ist wie eine Breite (im Folgenden häufig mit dem Buchstaben w bezeichnet) des jeweiligen Belüftungslochs. Je größer das Verhältnis von Länge zu Breite (d. h. das Längenverhältnis b/w) eines Belüftungsloch ist, umso länglicher und schlitzförmiger ist das betreffende Belüftungsloch.

Außerdem ist vorgesehen, dass innerhalb einer jeden der Reihen zwischen einem jeden Paar benachbarter Belüftungslöcher der Reihe jeweils ein Abstand (der im Folgenden häufig mit dem Buchstaben y bezeichnet wird) besteht, der maximal ein Drittel, vorzugsweise maximal ein Fünftel, besonders bevorzugt nur ein Zehntel der Länge (b) jedes dieser beiden Belüftungslöcher beträgt. Je kleiner die Abstände zwischen den benachbarten Belüftungslöchern innerhalb einer Reihe im Verhältnis zu deren Längen sind, d.h. je kleiner das Verhältnis y/b ist, um so größer ist das Öffnungsverhältnis der Zusatzschicht entlang dieser Reihe. Dabei bezeichnet das Öffnungsverhältnis der Zusatzschicht das Verhältnis der durch die Zusatzschicht nicht abgedeckten Fläche zur abgedeckten Fläche. Im Prinzip sind die Längen der Belüftungslöcher nach oben hin und die Abstände (y) zwischen den Belüftungslöchern innerhalb der Reihen nach unten hin nur durch eine erforderliche mechanische Stabilität der Zusatzschicht beschränkt.

Ein Reihenabstand (der im Folgenden häufig mit dem Buchstaben x bezeichnet wird) zwischen einem jeden Paar benachbarter Reihen ist sowohl mindestens dreimal, vorzugsweise mindestens fünfmal, besonders bevorzugt mindestens zehnmal größer ist als jeder der genannten Abstände (y) zwischen benachbarten Belüftungslöchern dieser beiden Reihen. Außerdem ist der genannte Reihenabstand (x) benachbarter Reihen er Belüftungslöcher mindestens dreimal, vorzugsweise mindestens fünfmal, besonders bevorzugt mindestens zehnmal größer als die Breiten (w) der Belüftungslöcher dieser beiden Reihen. Dies bedeutet, dass die Abstände (y) zwischen den Belüftungslöchern gemessen in Richtung entlang der Reihen wesentlich kleiner sind als die Abstände (x) zwischen den Belüftungslöcher gemessen in einer Richtung quer zu den Reihen der Belüftungslöcher. Das Verhältnis x/y ist also relativ groß, also größer als 3, vorzugsweise größer als 5 bzw. besonders bevorzugt größer als 10, je nach Ausführungsform. Gleichzeitig sind die Abstände (x) zwischen benachbarten Reihen wesentlich größer als die Breiten (w) dieser Belüftungslöcher. Das Verhältnis x/w ist also relativ groß, also größer als 3, vorzugsweise größer als 5 bzw. besonders bevorzugt größer als 10, je nach Ausführungsform.
Die beschriebenen Größenverhältnisse zwischen der Länge (b) und der Breite (w) der Belüftungslöcher, den Abständen (y) benachbarter Belüftungslöcher innerhalb der Reihen und den Abständen (x) der benachbarten Reihen, die Ausrichtung der Belüftungslöcher längs der Reihen lassen sich also zusammenfassen durch die folgenden Relationen:
a) w < b/3,
b) y < b/3,
c) w < x/3,
d) y < x/3.

Durch eine entsprechende Ausformung, Anordnung und Orientierung der Belüftungslöcher in der Zusatzschicht wird gegenüber bekannten Brennstoffzellen erreicht, dass die Konzentrationsgradienten der Reaktanden Sauerstoff und Wasser zwischen der Zusatzschicht und der Elektroden-Membran-Einheit fast ausschließlich quer, also senkrecht zu den Reihen der Belüftungslöcher auftreten, so dass auch die Diffusionswege der Reaktanden hauptsächlich quer zu den Reihen verlaufen. Dies hat eine besonders homogene, praktisch eindimensionale Konzentrationsverteilung der genannten Reaktanden zwischen der Zusatzschicht und der Elektroden-Membran-Einheit sowie innerhalb der Elektroden-Membran-Einheit zur Folge. Außerdem werden dadurch, dass die Diffusionswege der Reaktanden im Wesentlichen parallel bzw. antiparallel zueinander ausgerichtet sind, Konzentrationsschwankungen und Konzentrationsfluktuationen im Vergleich zu bekannten Anordnungen und Ausformungen von Belüftungslöchern besonders gut ausgeglichen und somit reduziert, insbesondere auf der Längenskala der Reihenabstände (x).

Es zeigt sich also, dass mit der vorgeschlagenen inhomogenen und nicht-isotropen Anordnung und Ausformung der Belüftungslöcher eine besonders gleichmäßige Konzentrationsverteilung der Reaktanden zwischen den Belüftungslöchern erzielen lässt, die insbesondere gleichmäßiger ist als Konzentrationsverteilungen der Reaktanden zwischen homogen und isotrop verteilten, kreisrunden Belüftungslöchern. Bei gleichem Stoffumsatz ist der Konzentrationsgradient zwischen zweidimensional gleichmäßig verteilten Löchern immer höher als der zwischen parallel angeordneten Schlitzen.

Durch eine geeignete Wahl der Größen x, y, w und b innerhalb der oben genannten Relationen kann somit eine homogene Stromdichteverteilung zwischen den Belüftungslöchern erzielt werden, wodurch eine größere Leistungsdichte der Brennstoffzelle erreicht werden kann. Gleichzeitig ist es möglich, die Membran-Elektrolyt-Einheit (und ggf. eine Gasdiffusionsschicht) vor einem Austrocknen zu schützen und außerdem eine ausreichende Sauerstoffversorgen sowie einen ausreichender Wasseraustrag sicherzustellen. Im Vergleich zu bekannten, gleichmäßigeren Verteilungen von Belüftungslöchern kann auch bei einem relativ großen Abdeckungsgrad der Zusatzschicht eine ausreichende Sauerstoffversorgung der Brennstoffzelle erzielt werden. Außerdem wird ein lokales Austrocknen der Elektroden-Membraneinheit, welches im Bereich der Löcher auftritt, besser vermieden, wodurch eine niedrigere Impedanz der Brennstoffzelle und somit eine höher Leistungsdichte der Brennstoffzelle erreicht werden kann. Insbesondere sind keine zusätzliche Belüftung mittels eines Belüftungssystems oder eine Befeuchtung der Reaktandenströme (Wasserstoff, Luft) mit einem Befeuchtungssystem erforderlich.

Beispielsweise kann vorgesehen sein, dass die Längen (b) der Belüftungslöcher jeweils größer als 1 mm sind. Prinzipiell sind die Längen (b) der Belüftungslöcher nach oben nicht beschränkt. Die Belüftungslöcher können sich beispielsweise über die gesamte Membran-Elektroden-Einheit erstrecken. Dann umfassen die einzelnen Reihen der Belüftungslöcher jeweils nur ein einziges Belüftungsloch. Dies entspricht dem speziellen Fall, dass y = 0 gilt. Die Bedingungen y < b/3 und y < x/3 sind auch in diesem Fall erfüllt.

Die Breiten (w) der Belüftungslöcher liegen vorzugsweise jeweils in einem Bereich zwischen 0,2 mm bis 1 mm. Innerhalb jeder der Reihen von Belüftungslöchern ist der Abstand (y) zwischen jedem Paar benachbarter Belüftungslöcher der Reihe jeweils kleiner als 2 mm, vorzugsweise kleiner als 1 mm. Der Abstand (x) zwischen einem jeden Paar benachbarter Reihen der Belüftungslöcher kann zwischen 0,6 mm und 10 mm, vorzugsweise zwischen 2 mm und 8 mm liegen.

Eine besonders gleichmäßige Konzentrationsverteilung der Reaktanden und ein besonders guter Schutz vor einem Austrocknen der Elektroden-Membran-Einheit lässt sich erreichen, wenn die Belüftungslöcher besonders länglich ausgestaltet sind, wenn also die jeweiligen Seitenverhältnisse b/w besonders groß sind, vorzugsweise größer als 5 und besonders bevorzugt größer als 10. Zur Erzielung großer Seitenverhältnisse b/w können die Belüftungslöcher als längliche, schmale und vorzugsweise rechteckige Schlitze ausgestaltet sein.

Ein besonderer Vorteil großer Seitenverhältnisse besteht außerdem in einer leichteren Herstellbarkeit von Zusatzschichten mit derartigen Belüftungslöchern, beispielsweise mittels eines Stanzverfahrens. Dahingegen sind Zusatzschichten mit Belüftungslöchern mit kreisrunden oder quadratischen Belüftungslöchern aufwendiger in ihrer Herstellung, da zur Erzielung ähnlicher Lochstrukturen eine größere Anzahl von Belüftungslöchern hergestellt werden muss als im Fall länglicher Belüftungslöchern mit einem großen Seitenverhältnis. Somit können im Fall von länglichen, insbesondere schlitzförmigen und vorzugsweise rechteckigen Belüftungslöchern erhebliche Kostenvorteile erzielt werden, besonders in der Massenproduktion.

Der Abstand (y) zwischen benachbarten Belüftungslöchern innerhalb einer gegebenen Reihe ist vorteilhafterweise groß genug gewählt, um eine ausreichende mechanische Stabilität der Zusatzschicht zu erzielen. Solange eine ausreichende Stabilität der Zusatzschicht gegeben ist, kann diese Größe beliebig klein gewählt werden, insbesondere auch kleiner als 0,5 mm. Solange die Größe y ausreichend klein gehalten wird, hat ihr genauer Werte im Vergleich zu den Größen x, w und b nur einen untergeordneten Einfluss auf die Eigenschaften der Brennstoffzelle.

In einer Ausführungsform ist zwischen der Zusatzschicht und der Kathode der Elektroden-Membran-Einheit eine mit Poren versehene Gasdiffusionsschicht angeordnet zur verbesserten Verteilung (Diffusion) des Sauerstoffs zur Kathode und zur besseren Abführung des Wassers von der Kathode. Diese Gasdiffusionsschicht kann als eine eigene Schicht gegeben sein. Sie kann aber auch als eine Mikrostrukturierung auf einer der Kathode zugewandten Oberfläche der Zusatzschicht ausgestaltet sein. Dabei umfasst die Mikrostrukturierung kanalförmige, nadelförmige, stabförmige oder in einer beliebigen anderen Form erhabene Mikrostrukturen, vorzugsweise mit eine Höhe der Mikrostrukturen zwischen 100 µm und 400 µm und einem mittleren Abstand zwischen den Mikrostrukturen von etwa 300 µm oder weniger. Solche Mikrostrukturen können beispielsweise durch ein Ätzverfahren hergestellt werden. Durch eine derartige Integration der Gasdiffusionsschicht in die Zusatzschicht kann der Aufbau der Brennstoffzelle vereinfacht und verbilligt werden.

Der Reihenabstand (x) kann auch bezüglich einer Dicke (im Folgenden häufig mit dem Buchstaben d bezeichnet) der Gasdiffusionsschicht optimiert werden. Beispielsweise kann vorgesehen sein, dass der Abstand (x) zwischen einem jedem Paar benachbarter Reihen von Belüftungslöchern mindestens fünfmal so groß ist wie die Dicke (d) der Gasdiffusionsschicht und/oder dass der genannte Reichenabstand (x) kleiner ist als ein Fünfundzwanzigfaches der Dicke (d) der Gasdiffusionsschicht, also 4 * d < x < 35 * d.

Durch die in genannter Weise dimensionierten und angeordneten Belüftungslöcher in der Zusatzschicht wird gewährleistet, dass die Brennstoffzelle auch bei hohen Leistungsdichten und einer starken Belüftung der Kathode, insbesondere mittels eines aktiven oder passiven Belüftungssystems, sowie bei einer erhöhten Betriebstemperatur vor einem Austrocknen geschützt ist. Durch die relativ kleinen Belüftungslöcher, die vorzugsweise eine Querschnittsfläche zwischen 0,2 mm² und 2 mm² aufweisen, und dem relativ großen Lochabstand zwischen diesen Belüftungslöchern verlangsamt. sich ein Wasseraustrag aus der Elektroden-Membran-Einheit im Vergleich zu Brennstoffzellen ohne eine solche Zusatzschicht bzw. mit einer Zusatzschicht mit größeren Belüftungslöchern und/oder geringeren Abständen zwischen den Belüftungslöchern. Die erfindungsgemäße Dimensionierung und Beabstandung der Belüftungslöcher verlangsamt den genannten Wasseraustrag aus der Elektroden-Membran-Einheit und erhöht eine Membranfeuchte durch eine Vergrößerung eines für den Wasseraustrag erforderlichen Unterschied zwischen einem Wassergehalt in der Membran und einem Wassergehalt in einer an die Kathodenseite der Membran angrenzenden Umgebung (gegeben durch die relative Luftfeuchte auf der Kathodenseite), in die das Wasser aus der Membran durch die Belüftungslöcher der Zusatzschicht hindurch abgeführt wird. Auf diese Weise kann mit der erfindungsgemäßen Brennstoffzelle ein zu geringer Wassergehalt der Membran oder gar ein Austrocknen der in der Elektroden-Membran-Einheit enthaltenen Polymermembran effektiv verhindert werden, insbesondere auch bei einer sehr hohe Leistungsdichte, bei denen die Brennstoffzelle zur Sauerstoffversorgung und Kühlung stark belüftet und somit der Wasseraustrag der Brennstoffzelle tendenziell beschleunigt wird, sowie bei einer hohen Betriebstemperatur.

Insbesondere kann auf diese Weise auf eine zusätzliche Befeuchtung der Membran mittels einer (aktiven) Befeuchtungsvorrichtung verzichtet werden. Außerdem ist in einer Ausführungsform der Erfindung vorgesehen, dass die Brennstoffzelle einen Feuchte-Austauscher umfasst, mit dem ein Teil eines an der Kathode der Brennstoffzelle entstehenden Wasserdampfs einem der Anode zugeführten Wasserstoffgas zuführbar ist für eine bessere Befeuchtung der Membran. Eine Befeuchtungsvorrichtung feuchtet in der Regel das sauerstoffhaltige Gas an, mit der die Kathode belüftet wird. Ferner ist die erfindungsgemäße Brennstoffzelle besonders gut mit einer passiven Belüftung und Kühlung ohne Ventilatoren geeignet, da die Polymermembran durch die erfindungsgemäße Zusatzschicht auch bei relativ hohen Temperaturen, wie sie bei einer passiven Belüftung unter Umständen wahrscheinlicher sind als bei einer aktiven Belüftung, vor einem zu geringen Wassergehalt bzw. vor einem Austrocknen ausreichend geschützt ist. Aus dem gleichen Grund ist die erfindungsgemäße Brennstoffzelle auch für einen Einsatz in einem Brennstoffzellenstapel geeignet, in dem es konstruktionsbedingt besonders leicht zu hohen Betriebstemperaturen kommen kann. Ebenso ist die erfindungsgemäße Brennstoffzelle besonders unempfindlich gegenüber schwankenden Umgebungsbedingungen, insbesondere Umgebungstemperaturen und relativen Luftfeuchtigkeiten, da die Gefahr eines zu starken Austrocknens der Membran geringer ist als bei konventionellen Brennstoffzellen ohne eine erfindungsgemäße Zusatzschicht.

Wesentliche Vorteile der erfindungsgemäßen Brennstoffzelle sind also der auch bei hohen Leistungsdichten und Betriebstemperaturen mögliche Verzicht auf eine aufwändige aktive Belüftungsvorrichtung und Befeuchtungsvorrichtung. Somit kann die vorgeschlagene Brennstoffzelle konstruktiv einfach und kompakt, leicht und kostengünstig hergestellt werden. Ferner kann durch einen Verzicht auf aktive Belüftungs-, Kühlungs- und/oder Befeuchtungssystem auch ein mit diesen Systemen verbundenen Energieverbrauch eingespart werden, wodurch sich der Wirkungsgrad der Brennstoffzelle verbessert. Somit eignet sich eine derartige Brennstoffzelle (oder Brennstoffzellenstapel mit solchen Brennstoffzellen) insbesondere für einen Einbau und eine Verwendung zur Energieversorgung in kleinen, portablen Geräten, wie etwa in Geräten der Konsumgüterelektronik (Mobilfunkgeräte, Laptops, Spielzeug und dergleichen), in autarken Ladegeräten mit kleiner bis mittlerer Leistung. Außerdem eignen sich die vorgeschlagenen Brennstoffzellen (oder Brennstoffzellenstapel mit solchen Brennstoffzellen) zum Einbau und zur Verwendung zur Energieversorgung in Fluggeräten oder Flugzeugen, insbesondere in unbemannten Flugobjekte (UAVs, unmanned arial vehicles). Bei Fluggeräten ist ein Fahrtwind vorteilhafter Weise zur Kühlung der Brennstoffzelle (des Brennstoffzellenstapels) und zur Kathodenversorgung nutzbar.

Ein weiterer wesentlicher Vorteil der vorgeschlagenen Brennstoffzelle besteht darin, dass sie in ihrer Konstruktion besonders leicht an vorgegebene Betriebsbedingungen oder Leistungsbereiche angepasst werden kann. Dabei ist es möglich, die Anordnungen, Größen und Formen der Belüftungslöcher für die vorgegebenen Betriebsbedingungen und/oder Leistungsbereiche so zu wählen, dass auf eine aktive Luftversorgung der Kathoden mittels eines Belüftungssystems (Lüfter, Pumpen) verzichtet werden kann.

In einer Ausführungsform für einen Impulsbetrieb der Brennstoffzelle etwa können (in Abhängigkeit von der Impulsfrequenz und der Impulshöhe) die Belüftungslöcher besonders klein, vorzugsweise mit Breiten (w) einem Bereich zwischen 0,2 mm und 0,6 mm, und die Abstände (x) zwischen benachbarten Reihen der Belüftungslöchern besonders groß, vorzugsweise größer als 6 mm, besonders bevorzugt in einem Bereich zwischen 6 mm und 10 mm, gewählt werden, um die Feuchte noch besser in der Membran speichern zu können. Während eines Leistungsimpulses ist der zwischen der Zusatzschicht und der Kathode der Elektroden-Membran-Einheit vorhandene, beispielsweise in einer Gasdiffusionsschicht gespeicherte, Sauerstoff ausreichend für die ablaufende chemische Reaktion. In einer Ruhephase zwischen zwei Leistungsimpulsen wird wieder Sauerstoff durch die Belüftungslöcher zur Kathode nachtransportiert.

In einer alternativen Ausführungsform, welche sich - besonders gut für einen Betrieb nahe am Leistungsmaximum der Zelle eignet, wird der Abstand (x) zwischen benachbarten Reihen der Belüftungslöcher kleiner gewählt, vorzugsweise in einem Bereich zwischen 0,6 mm und 4 mm bei einer Schlitzbreite w zwischen 0.2 und 0.6 mm, um eine ausreichende kontinuierliche Sauerstoffversorgung der Elektroden-Membran-Einheit zu gewährleisten.

Eine weitere Ausführungsform, die sich besonders gut für einen Betrieb bei hoher Spannung aber geringer Leistungsdichte eignet, kann wiederum einen etwas größeren Abstand (x) zwischen den Reihen der Belüftungslöchern haben als im vorangehenden Beispiel, vorzugsweise in einem Bereich zwischen 3 mm und 6 mm bei einer bevorzugten Schlitzbreite w zwischen 0.2 und 0.4 mm, um einen möglichst guten Schutz vor einem Austrocknen der Membran zu gewährleisten.

Die Belüftungslöcher der Zusatzschicht werden vorzugsweise klein ausgeführt bei Brennstoffzellen für eine Verwendung innerhalb eines Brennstoffzellenstapels, weil in einem solchen eine Prozesswärme langsamer abgeführt werden kann und somit hohe Betriebstemperaturen auftreten können. Planare oder einzelne Brennstoffzellen mit einer offenen Kathodenfläche zur Umgebungsluft können die Wärme wesentlich besser abgeben und neigen deswegen wesentlich weniger zum Austrocknen. Hier kann die Erfindung vorteilhaft eingesetzt werden, wenn kontinuierlich hohe Umgebungstemperaturen (> 40° C) vorliegen oder in dem oben beschriebenen Fall einer Impulsbelastung.

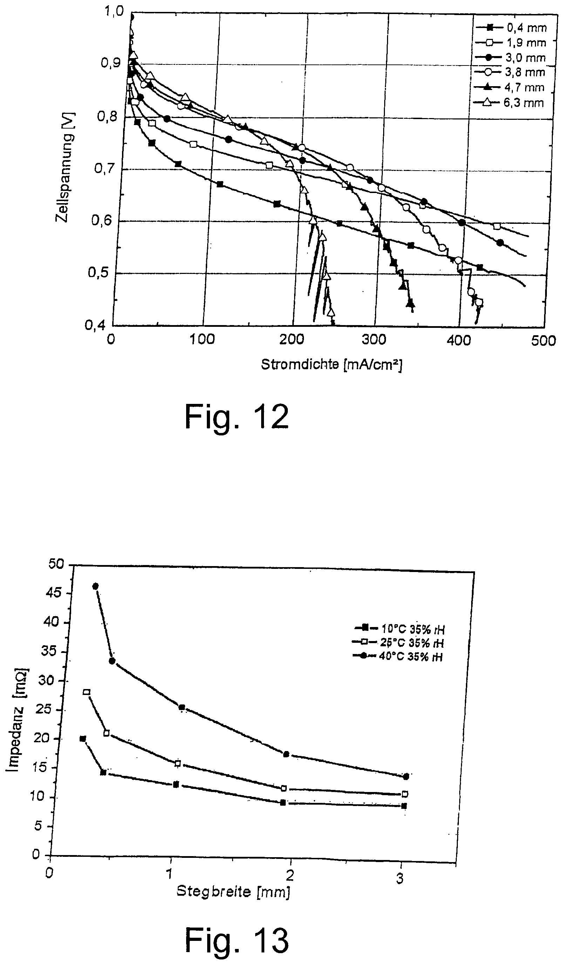

Entsprechend werden die Belüftungslöcher besonders klein und die Abstände zwischen ihnen groß gewählt, wenn die Brennstoffzelle bei besonders hohen Betriebs- bzw. Umgebungstemperaturen betrieben werden soll. Aufgrund der Komplexität der Zusammenhänge zwischen dem Durchmesser und dem Abstand der Belüftungslöcher und den Eigenschaften der Brennstoffzelle, werden diese Zusammenhänge weiter unten anhand von Figuren 12 bis 19 näher erläutert.

Allgemein gilt, dass die Membran umso besser vor einem Austrocknen geschützt ist, je größer ein durch die Zusatzschicht erzielter Abdeckungsgrad der Elektroden-Membran-Einheit ist. Dieser ist gegeben durch das Verhältnis einer Gesamtfläche der Zusatzschicht abzüglich der Gesamtfläche aller Belüftungslöcher der Zusatzschicht (also einer gesamten Abdeckfläche der Zusatzschicht) zu der Gesamtfläche der Zusatzschicht. In einer Ausführungsform mit einem besonders sicheren Schutz der Membran vor einem Austrocknen beträgt der Abdeckungsgrad mindestens 80%, vorzugsweise 90% oder mehr. Es sei betont, dass nicht alleine der durch die Zusatzschicht erzielte Abdeckungsgrad für eine optimale Funktion der Brennstoffzelle entscheidend ist, sondern auch der tatsächliche Absolutwert des Abstand zwischen den Belüftungslöchern, da dieser einen Diffusionsweg des Wasser bestimmt. Umfasst die Brennstoffzelle eine Gasdiffusionsschicht, so ist ein optimaler Abstand zwischen den Belüftungslöchern auch von einer Dicke der Gasdiffusionsschicht abhängig.

Durch eine Zusatzschicht mit einem Abdeckungsgrad von 90% mit sehr kleinen Belüftungslöchern mit einem Abstand (x) zwischen benachbarten Reihen von etwa 1 mm ist ein Austrocknen der Membran weniger effektiv verhinderbar als durch eine Zusatzschicht mit gleichem Abdeckungsgrad von 90% aber mit größeren Belüftungslöchern mit einem größeren Abstand (x) zwischen im letzteren Fall größere Konzentrationsgradienten des Wassers in der Membran entstehen.

Bei einer weiteren Ausführungsform ist die Zusatzschicht für eine besonders einfache Herstellbarkeit in Form einer Beschichtung, eines Lackes oder einer Folie auf die Gasdiffusionsschicht aufgetragen.

Dabei kann eine entsprechende Folie vor einem Auflaminieren auf die Gasdiffusionsschicht durch ein Stanzverfahren mit den Belüftungslöchern versehen werden. Ferner können im Fall, dass die Zusatzschicht als eine Beschichtung, insbesondere als eine Sprühbeschichtung, ausgeführt ist, Oberflächenbereiche der Gasdiffusionsschicht unbeschichtet bleiben zur Herstellung der Belüftungslöcher mit den genannten Durchmessern und Abständen. Auf diese Weise können ein entsprechender Teil der Poren der Gasdiffusionsschicht verschlossen werden, während ein anderer Teil der Poren der Gasdiffusionsschicht weiter durchlässig bleibt.

Die Zusatzschicht ist elektrisch leitfähig ausgestaltet. Insbesondere kann die Zusatzschicht als ein Metallblech gegeben sein, wobei die Belüftungslöcher durch Stanzen, Laserbearbeitung oder Ätzen hergestellt sein können. Als Metalle für die Zusatzschicht kommen insbesondere Edelstahl, Kupfer oder Aluminium in Betracht, welche vorzugsweise eine Oberflächenveredelung, beispielsweise mit Nickel, Silber, Gold, Palladium oder Platin, aufweisen zur Vorbeugung von Korrosionsprozessen und Verkleinerung eines Kontaktwiderstandes zur Kathode, Gasdiffusionsschicht oder externen Stromanschlüssen. Die Zusatzschicht ist als kathodischer Stromableiter ausgestaltet zur Einsparung zusätzlicher Bauteile der Brennstoffzelle. Außerdem ist es möglich, die Zusatzschicht so zu dimensionieren, dass sie seitlich über die Elektroden-Membran-Einheit herausragt. Dann hat die Zusatzschicht vorteilhafter Weise gleichzeitig die Funktion eines Wärmeableiters mit einer Kühlwirkung für die Brennstoffzelle, da die Reaktionswärme durch über die Elektroden-Membran-Einheit herausragende Bereiche der Zusatzschicht besonders effektiv an die Umgebung abgegeben werden kann.

In einer Weiterentwicklung der Brennstoffzelle ist vorgesehen, dass zwischen der Elektroden-Membran-Einheit und der Zusatzschicht oder auf einer der Elektroden-Membran-Einheit abgewandten Seite der Zusatzschicht eine Zwischenschicht mit Belüftungslöchern angeordnet ist, welche relativ zur Zusatzschicht verschiebbar ist.

Eine derartige Zwischenschicht eignet sich zur teilweisen Verdeckung der Belüftungslöcher der Zusatzschicht. Dazu ist die Zwischenschicht relativ zur Zusatzschicht so verschiebbar, dass ein Teil der Belüftungslöcher der Zwischenschicht verdeckt wird und ein anderer Teil der Belüftungslöcher der Zusatzschicht mit Belüftungslöchern der Zwischenschicht in Deckung gebracht werden können. Auf diese Weise ist der Abdeckungsgrad der Elektroden-Membran-Einheit einstellbar, so dass die Brennstoffzelle gezielt auf Leistungsbereiche und Umgebungsbedingungen, wie etwa Umgebungstemperaturen, einstellbar ist ohne die Konstruktion der Brennstoffzelle ändern zu müssen. Um dies weiter zu vereinfachen, haben die Belüftungslöcher in der Zwischenschicht vorzugsweise die gleiche Größe, Form und Anordnung wie die Belüftungslöcher in der Zusatzschicht. der Zusatzschicht.

In einer Weiterentwicklung ist vorgesehen, dass die Brennstoffzelle ein auf der Kathodenseite der Elektroden-Membran-Einheit angeordnetes Belüftungselement umfasst, das auf einer der Elektroden-Membran-Einheit zugewandten Seite des Belüftungselements Stege aufweist zur Ausbildung von auf einer der Elektroden-Membran-Einheit abgewandten Seite der Zusatzschicht angeordneten Belüftungskanälen. Dabei kann das Belüftungselement und die Zusatzschicht in ein Bauteil integriert sein, wie weiter unten beschrieben. Andernfalls ist die Zusatzschicht zwischen der Elektroden-Membraneinheit und dem Belüftungselement angeordnet. Die Belüftungskanäle können zu den Reihen der Belüftungslöchern parallel, quer oder in einer beliebigen anderen Richtung orientiert sein. Um einen entlang des Verlaufs der Belüftungskanäle zunehmenden Feuchtigkeitsgehalt der Luft in den Belüftungskanälen auszugleichen, kann vorgesehen sein, den Abstand (x) zwischen den Reihen entlang dem Verlauf der Belüftungskanäle zu reduzieren. Es kann zum selben Zweck vorgesehen sein, die Breite (w) der Belüftungslöcher entlang des Verlaufs der Belüftungslöcher zu vergrößern, um den Austrag von Wasser aus der Membran bzw. aus der Gasdiffusionsschicht zu verstärken.

Mit einem solchen Belüftungselement, welches ein Teil eines aktiven oder passiven Belüftungssystems sein kann, lässt sich mittels der Ausformung der Belüftungskanäle die Belüftung der Kathode, bzw. der Gasdiffusionsschicht, mit dem sauerstoffhaltigen Gas gezielt einstellen. Bei einer passiven Belüftung mittels natürlicher Konvektion, welche ohne Ventilatoren auskommt, haben die Belüftungskanäle vorzugsweise eine Querschnittsfläche zwischen 1 mm² und 50 mm², besonders bevorzugt zwischen 1 mm² und 25 mm². Auf diese Weise sind eine ausreichende Versorgung der Brennstoffzelle mit Sauerstoff und eine ausreichende Abführung des Wassers erreichbar. Durch die erfindungsgemäße Zusatzschicht mit den Belüftungslöchern ist außerdem gewährleistet, dass die Polymermembran dennoch vor einem Austrocknen geschützt ist.
Ein derartiges Belüftungselement ist bereits aus der Druckschrift DE 10 2007 007 704 A1 bekannt. Dort wird beschrieben, dass die Belüftungselemente insbesondere auch aus elektrisch isolierendem, leichtem Kunststoff gefertigt sein können. Der dann benötigte kathodische Stromableiter kann dann vorteilhafterweise als die hier beschriebene Zusatzschicht ausgestaltet sein, so das keine zusätzlichen Schichten oder Bauteile notwendig sind.

Alternativ kann das Belüftungselement aber auch durch eine Bipolarplatte gegeben sein, welche üblicherweise in herkömmlichen Brennstoffzellen verwendet wird. Auch dann ist die Zusatzschicht vorzugsweise elektrisch leitfähig ausgestaltet zur elektrischen Verbindung von der Kathode bzw. Gasdiffusionsschicht mit der Bipolarplatte.

In einer Ausführungsform der Brennstoffzelle mit einem Belüftungselement zur Ausbildung von Belüftungskanälen und Belüftungslöchern in der Zusatzschicht, die in Reihen angeordnet sind, verlaufen diese Reihen im Wesentlichen senkrecht zu den Belüftungskanälen, welche wiederum vorzugsweise parallel zu einer kürzeren Seite der Elektroden-Membran-Einheit. Dies hat den Vorteil, dass ein Gasaustausch zwischen den Belüftungskanälen und der Elektroden-Membran-Einheit besonders gut vergleichmäßigt ist ebenso wie ein Anpressdruck, mit dem die Zusatzschicht auf die Elektroden-Membran-Einheit pressbar ist.

Die Stege des Belüftungselements sind zur Einsparung von Gewicht und zur Erzielung möglichst breiter Belüftungskanäle möglichst dünn ausgestaltet. Vorzugsweise beträgt eine Dicke der Stege zwischen 0,1 mm und 1 mm.

Für eine Einsparung von Bauteilen kann auch vorgesehen sein, dass die Zusatzschicht durch verbreiterte, der Elektroden-Membran-Einheit zugewandte Endstücke der Stege des Belüftungselements ausgebildet ist. Somit ist die Zusatzschicht ein integraler Bestandteil des Belüftungselements.

Die Erfindung beinhaltet außerdem einen Brennstoffzellenstapel, welcher mindestens zwei Brennstoffzellen hier vorgeschlagener Art umfasst. Ein solcher Brennstoffzellenstapel hat die entsprechenden Vorteile dieser Brennstoffzellen, insbesondere den, dass die Polymermembranen in diesen Brennstoffzellen besonders gut vor einem Austrocknen geschützt sind und der Brennstoffzellenstapel auch bei hohen Leistungsdichten und hohen Betriebstemperaturen ohne ein zusätzliches aktives Befeuchtungs- oder Belüftungssystem betreibbar ist. Vielmehr genügt bereits ein passives Belüftungselement für eine ausreichende Belüftung, Wasser- und Wärmeabfuhr. Wichtig ist bei der Verwendung von Belüftungselementen, dass die Querschnittsflächen der Belüftungskanäle in den Belüftungselementen hinreichend groß sind im Vergleich zu den Belüftungslöchern in den Zusatzschichten. Ferner müssen die Belüftungslöcher, wie bereits oben beschreiben, ausreichend voneinander beabstandet sein.

Ein weiterer Vorteil des erfindungsgemäßen Brennstoffzellenstapels ist, dass er durch gezielte Ausgestaltung der Zusatzschicht auf bestimmt Betriebsbedingungen und Leistungsbereiche optimiert werden kann, analog zur obigen Beschreibung der Brennstoffzellen. Eine weitere ausführliche Beschreibung der möglichen Optimierung der Brennstoffzellen anhand der Ausgestaltung und Anordnung der Belüftungslöcher, ist weiter unten in den Erläuterungen zu Figuren 12 bis 19 gegeben.

In einer Ausführungsform des Brennstoffzellenstapels hier vorgeschlagener Art sind jeweils zwei Brennstoffzellen zu Bi-Brennstoffzellen zusammengefasst, wobei jeweils die Anodenseiten der beiden Brennstoffzellen einander zugewandt sind und die beiden Kathodenseiten nach außen gerichtet sind, wie in der Druckschrift DE 10 2007 007 704 A1 beschrieben. Eine solche Anordnung erlaubt eine besonders einfache kompakte Bauweise des Brennstoffzellenstapels, wenn zwischen jeweils zwei benachbarten Bi-Brennstoffzellen dieser Art eine Separatorstruktur angeordnet ist, welche beidseitig als Belüftungselement für beide zueinander gerichteten Kathodenseiten der Bi-Brennstoffzellen ausgestaltet ist, vgl. Druckschrift DE 10 2007 007 704 A1. Dabei sind, wie bereits oben beschrieben, die Zusatzschichten vorzugsweise kühlrippenartig verbreitert und ragen seitlich über die Elektroden-Membran-Einheiten hinaus, so dass eine zusätzliche Kühlwirkung durch die Zusatzschichten erzielt wird.

In einer weiteren Ausführungsform des Brennstoffzellenstapels ist vorgesehen, dass die Zusatzschichten inneren Brennstoffzellen des Brennstoffzellenstapels einen größeren Abdeckungsgrad aufweisen als die Zusatzschichten äußerer Brennstoffzellen des Brenn-Brennstoffzellen für kühlere Umgebungsbedingungen eingerichtet als die inneren Brennstoffzellen des Brennstoffzellenstapels. Dies ist insofern sinnvoll, als eine Prozesswärme der inneren Brennstoffzellen in der Regel nur langsamer abführbar ist als eine Prozesswärme der äußeren Brennstoffzellen.

Weitere Ausführungsformen des erfindungsgemäßen Brennstoffzellenstapels ergeben sich mit den oben beschriebenen Ausführungsformen der erfindungsgemäßen Brennstoffzelle. Die jeweiligen Vorteile der im Brennstoffzellenstapel verwendeten Brennstoffzellenausführungen übertragen sich auf die entsprechende Ausführungsform des Brennstoffzellenstapels.

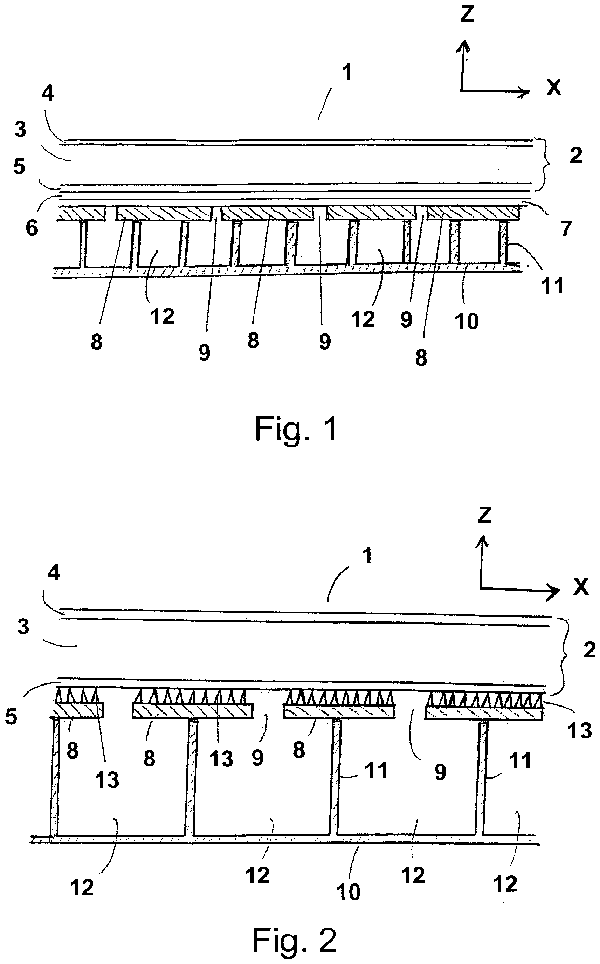

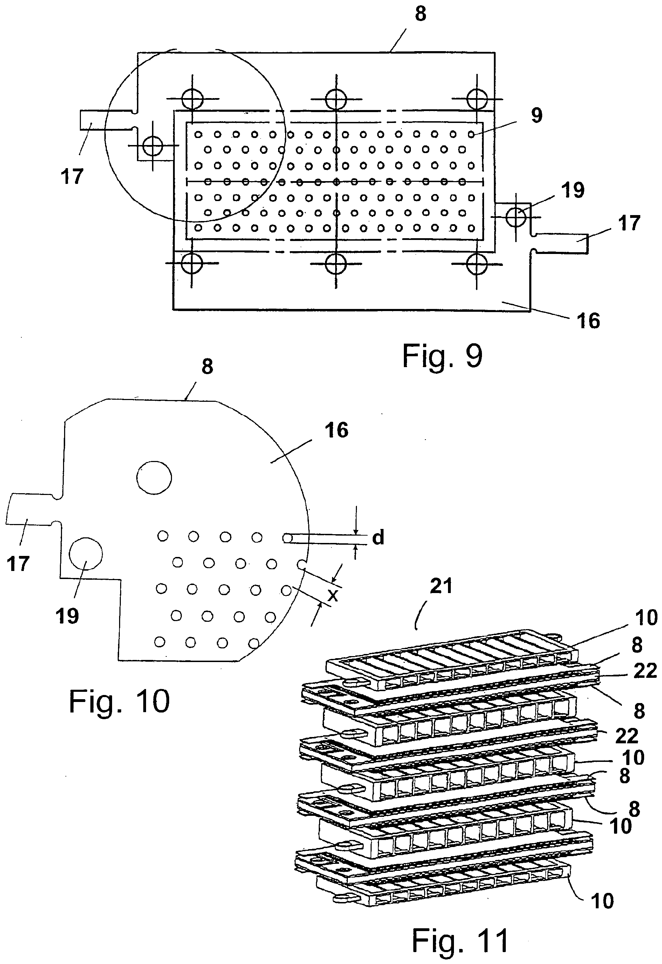

Im Folgenden werden zur Verdeutlichung und Erläuterung des Erfindungsgedankens spezielle Ausführungsformen der Erfindung (beziehungsweise Bauteile der Erfindung) anhand von Figuren 1 bis 8 und 11 näher beschrieben und auch diagrammatische Darstellungen von Betriebseigenschaften spezieller Ausführungsformen anhand von Figuren 12 bis 19 erläutert. Dahingegen zeigen Figuren 9 und 10 eine Zusatzschicht einer Brennstoffzelle mit gleichmäßig verteilten Belüftungslöchern. Es zeigt:
- Figur 1: einen Querschnitt durch eine Brennstoffzelle hier vorgeschlagener Art mit einer Gasdiffusionsschicht und einem Belüftungselement,
- Figur 2: einen Querschnitt durch eine Brennstoffzelle hier vorgeschlagener Art mit Mikrostrukturen auf der Zusatzschicht,
- Figur 3: einen Querschnitt durch eine Brennstoffzelle hier vorgeschlagener Art mit einer in ein Belüftungselement integrierten Zusatzschicht und einer relativ zur Zusatzschicht verschiebbaren Zwischenschicht,
- Figur 4: eine als Stromableiter ausgestaltete Zusatzschicht einer Brennstoffzelle hier vorgeschlagener Art
- Figur 5: eine als Stromableiter ausgestaltete Zusatzschicht einer Brennstoffzelle hier vorgeschlagener Art mit reihenförmig angeordneten Belüftungslöchern,
- Figur 6: eine vergrößerten Teilbereich der in Figur 5 gezeigten Zusatzschicht,
- Figur 7: eine weitere als Stromableiter ausgestaltete Zusatzschicht einer Brennstoffzelle hier vorgeschlagener Art mit reihenförmig angeordneten Belüftungslöchern,
- Figur 8: einen vergrößerten Teilbereich der in Figur 7 gezeigten Zusatzschicht,
- Figur 9: eine als Stromableiter ausgestaltete Zusatzschicht einer Brennstoffzelle mit gleichmäßig verteilten Belüftungslöchern,
- Figur 10: einen vergrößerten Teilbereich der in Figur 9 gezeigten Zusatzschicht,
- Figur 11: einen Brennstoffzellenstapel hier vorgeschlagener Art,
- Figur 12: eine diagrammatische Darstellung einer Zellspannung einer Brennstoffzelle hier vorgeschlagener Art in Abhängigkeit von einer Stromdichte für verschiedene Abständen (x) zwischen Reihen von Belüftungslöchern,
- Figur 13: eine diagrammatische Darstellung einer Impedanz einer Brennstoffzelle hier vorgeschlagener Art in Abhängigkeit von dem Abstand (x) der Reihen der Belüftungslöcher bei verschiedenen Umgebungstemperaturen,
- Figur 14: eine diagrammatische Darstellung einer Leistungsdichte einer Brennstoffzelle hier vorgeschlagener Art in Abhängigkeit von dem Abstand (x) der Reihen der Belüftungslöcher bei verschiedenen Umgebungstemperaturen,
- Figur 15: eine diagrammatische Darstellung einer Zellspannung einer Brennstoffzelle hier vorgeschlagener Art in Abhängigkeit von eivorgeschlagener Art in Abhängigkeit von einer Stromdichte für verschiedene Anordnungen und Formen der Belüftungslöcher,
- Figur 16: eine diagrammatische Darstellung einer Zellspannung einer Brennstoffzelle hier vorgeschlagener Art in Abhängigkeit von einer Stromdichte für verschiedene Breiten (w) von Belüftungslöchern,
- Fign. 17: und 18 jeweils eine diagrammatische Darstellung einer Zellspannung einer Brennstoffzelle hier vorgeschlagener Art in Abhängigkeit von einer Stromdichte für verschiedene Abstände (x) zwischen Reihen von Belüftungslöchern und
- Figur 19: eine schematische Darstellung von Diffusionswegen von Reaktanden Sauerstoff und Wasser in einer Brennstoffzelle hier vorgeschlagener Art.

In Figur 1 ist ein Querschnitt durch eine Brennstoffzelle (1) hier vorgeschlagener Arte schematisch dargestellt. Sie beinhaltet eine Elektroden-Membran-Einheit (2), welche ein Polymerelektrolytmembran (3), eine Anode (4) und eine Kathode (5) umfasst, wobei die Elektroden jeweils katalytisch aktiviert sind. Die Brennstoffzelle weist ferner eine auf die Kathode (5) aufgetragene mikroporöse Schicht (6) auf, auf der eine Gasdiffusionsschicht (7) mit einer Dicke (d) von etwa 100 µm angeordnet ist. Auf dieser Gasdiffusionsschicht (7) ist eine Zusatzschicht (8) mit Belüftungslöchern (9) aufgetragen. Diese Zusatzschicht (8) ist elektrisch leitfähig und durch eine Graphitfolie gegeben, in die die Belüftungslöcher (9) durch Stanzen hergestellt sind. Die Belüftungslöcher (9) sind in Reihen angeordnet, wobei die Reihen nebeneinander und senkrecht zur Zeichenebene verlaufen Die Belüftungslöcher (9) sind als rechteckige Schlitze ausgestaltet mit einer Breite (w), gemessen parallel zur Zeichenebene, von etwa 0,2 mm und einer Länge (b), gemessen senkrecht zur Zeichenebene, von etwa 2 mm. Eine Querschnittsfläche der Belüftungslöcher beträgt etwa 0,4 mm². Ein mittlerer Abstand (x) der Reihen in Richtung x parallel zur Zeichenebene beträgt etwa 2 mm. Ein Abstand (y) zwischen benachbarten Belüftungsöffnungen einer Reihe beträgt etwa 0,5 mm. Es gelten somit folgende Verhältnisse: b/w = 10, b/y = 4, x/w = 10, x/y = 4 und x/d = 20. Die Zusatzschicht weist einen Abdeckungsgrad von etwa 90% auf.

Die Brennstoffzelle weist ferner ein Belüftungselement (10) mit Stegen (11) zur Ausbildung von Belüftungskanälen (12) auf, durch welche die Brennstoffzelle mittels natürlicher Konvektion belüftbar ist. Die Stege (11) haben eine Breite von etwa 0,1 mm, einen Abstand von 1 mm und eine Höhe von etwa 1,3 mm, so dass die Belüftungskanäle (12) eine Querschnittsfläche von jeweils etwa 1,3 mm² aufweisen. Die Belüftungslöcher (9) sind versetzt zueinander angeordnet, so dass in dem in Figur 1 gezeigten Querschnitt durch die Brennstoffzelle nur in jedem zweiten Belüftungskanal (12) ein Belüftungsloch (9) zu erkennen ist. Aufgrund der Anordnung, Größe und Form der Belüftungslöcher eignet sich die Brennstoffzelle besonders gut für einen Betrieb bei hohen Leistungsdichten. Für eine möglichst starke natürliche Konvektion in den Belüftungskanälen (12) können diese mit einer größeren Querschnittsfläche ausgestaltet sein als hier dargestellt. Beispielsweise könnten in diesem Beispiel die Stege (11) eine Breite von 0,8 mm sowie eine Höhe und eine Breite von jeweils 4 mm aufweisen. In dem gezeigten Beispiel sind die Längen der Belüftungskanäle (gemessen senkrecht zur Zeichenebene) hinreichend klein, so dass eine ausreichende Konvektion gewährleistet ist.

In Figur 2 ist ein Querschnitt durch eine weitere Brennstoffzelle (1) hier vorgeschlagener Art schematisch dargestellt. Sie beinhaltet wiederum eine Elektroden-Membran-Einheit (2), welche ein Polymerelektrolytmembran (3), eine Anode (4) und eine Kathode (5) umfasst, welche jeweils katalytisch beschichtet sind. Anstelle einer separaten Gasdiffusionsschicht weist in diesem Ausführungsbeispiel eine Zusatzschicht (8), welche direkt an die Kathode anschließt, nadelförmige Mikrostrukturen (13) auf mit einer Höhe, Breite und Abstand der Mikrostrukturen (13) von etwa 200 µm.

Die Zusatzschicht (8) ist elektrisch leitfähig und durch ein Edelmetallblech gegeben, dessen Oberfläche zum Korrosionsschutz und besseren Kontaktierung mit Silber veredelt ist und in das kreisrunde Belüftungslöcher (9) durch Laserbearbeitung hergestellt sind. Die Belüftungslöcher (9) sind in Reihen angeordnet, wobei die Reihen nebeneinander und senkrecht zur Zeichenebene verlaufen. Die Belüftungslöcher (9) sind als rechteckige Schlitze ausgestaltet mit einer Breite (w), gemessen parallel zur Zeichenebene, von etwa 0,6 mm und einer Länge (b), gemessen senkrecht zur Zeichenebene, von etwa 0,6 mm. Eine Querschnittsfläche der Belüftungslöcher beträgt etwa 1,8 mm². Ein mittlerer Abstand (x) der Reihen in Richtung x parallel zur Zeichenebene beträgt etwa 3 mm. Ein Abstand (y) zwischen benachbarten Belüftungsöffnungen einer Reihe beträgt etwa 0,5 mm. Es gelten somit folgende Verhältnisse: b/w = 5, b/y = 6, x/w = 5, x/y = 6 und x/d = 10. Die Zusatzschicht weist einen Abdeckungsgrad von etwa 83% auf.

Die Brennstoffzelle (1) weist ferner ein Belüftungselement (10) mit Stegen (11) zur Ausbildung von Belüftungskanälen (12) auf, durch welche die Brennstoffzelle mittels natürlicher Konvektion belüftbar ist. Die Stege (11) haben eine Breite von etwa 1 mm, einen Abstand und eine Höhe von etwa jeweils 2,5 mm, so dass die Belüftungskanäle eine Querschnittsfläche von jeweils 6,25 mm² aufweisen. Aufgrund der Anordnung, Größe und Form der Belüftungslöcher eignet sich die Brennstoffzelle besonders gut für einen Betrieb bei hohen Spannungen.

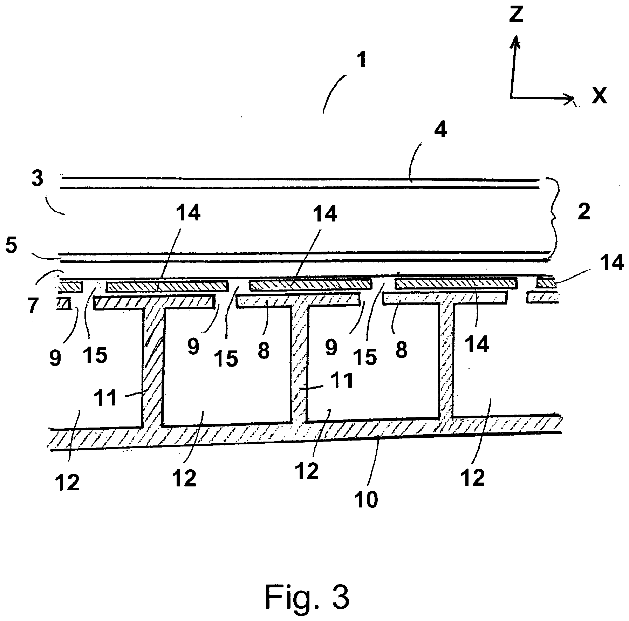

In Figur 3 ist ein Querschnitt durch eine weitere Brennstoffzelle (1) hier vorgeschlagener Art schematisch dargestellt. Sie beinhaltet wiederum eine Elektroden-Membran-Einheit (2), welche ein Polymerelektrolytmembran (3), eine Anode (4) und eine Kathode (5) umfasst, welche jeweils mit einem Katalytisch versetzt sind. Die Brennstoffzelle weist eine auf die Kathode (5) aufgetragene Gasdiffusionsschicht (7) mit einer Dicke von etwa 500 µm auf. In diesem Beispiel ist ein Zusatzschicht (8) in ein Belüftungselement (10) integriert und durch eine Verbreiterung von auf die Kathode (5) weisende Endstücken der Stege (11) des Belüftungselements (10) gegeben. Die Zusatzschicht (8) weist Belüftungslöcher (9) auf, die in Reihen angeordnet sind, wobei die Reihen nebeneinander und senkrecht zur Zeichenebene verlaufen. Die Belüftungslöcher (9) sind als rechteckige Schlitze ausgestaltet mit einer Breite (w), gemessen parallel zur Zeichenebene, von etwa 1 mm und einer Länge (b), gemessen senkrecht zur Zeichenebene, von etwa 5 mm. Eine Querschnittsfläche der Belüftungslöcher beträgt etwa 5 mm². Ein mittlerer Abstand (x) der Reihen in Richtung x parallel zur Zeichenebene beträgt etwa 6 mm. Ein Abstand (y) zwischen benachbarten Belüftungsöffnungen einer Reihe beträgt etwa 0,5 mm. Es gelten somit folgende Verhältnisse: b/w = 5, b/y = 10, x/w = 6, x/y = 12 und x/d = 12. Die Zusatzschicht weist einen Abdeckungsgrad von etwa 90% auf.

Die Stege (11) haben eine Breite von etwa 5 mm, einen Abstand und eine Höhe von etwa jeweils 5 mm, so dass die Belüftungskanäle eine Querschnittsfläche von jeweils 25 mm² aufweisen.
Zwischen der Zusatzschicht (8) und der Kathode (5) ist eine relativ zur Zusatzschicht (parallel zur Richtung x) verschiebbare Zwischenschicht (14) angeordnet, welche ihrerseits Belüftungslöcher (15) aufweist, welche einen gleichen mittleren Durchmesser und eine gleiche Anordnung wie die Belüftungslöcher (9) der Zusatzschicht aufweisen. Durch Verschieben der Zwischenschicht können sie daher mit den Belüftungslöchern (9) der Zusatzschicht (8) in Deckung gebracht werden. Durch ein teilweises Abdecken der Belüftungslöcher (9) der Zusatzschicht (8) durch die Zwischenschicht (14) lässt sich die Belüftung und somit Leistungseigenschaften der Brennstoffzelle (1) regulieren. Vorteilhafterweise sind die Belüftungslöcher in der Zusatzschicht (8) und in der verschiebbaren Zwischenschicht (14) so ausgestaltet, dass der Abdeckungsgrad zwischen 40% und 90% variierbar ist, so dass für alle möglichen Betriebszustände und Umgebungsbedingungen eine optimale Einstellung der Brennstoffzelle (1) herstellbar ist. Die Zwischenschicht (14) ist elektrisch leitfähig und durch ein Edelmetallblech gegeben, welches mit Nickel veredelt ist.

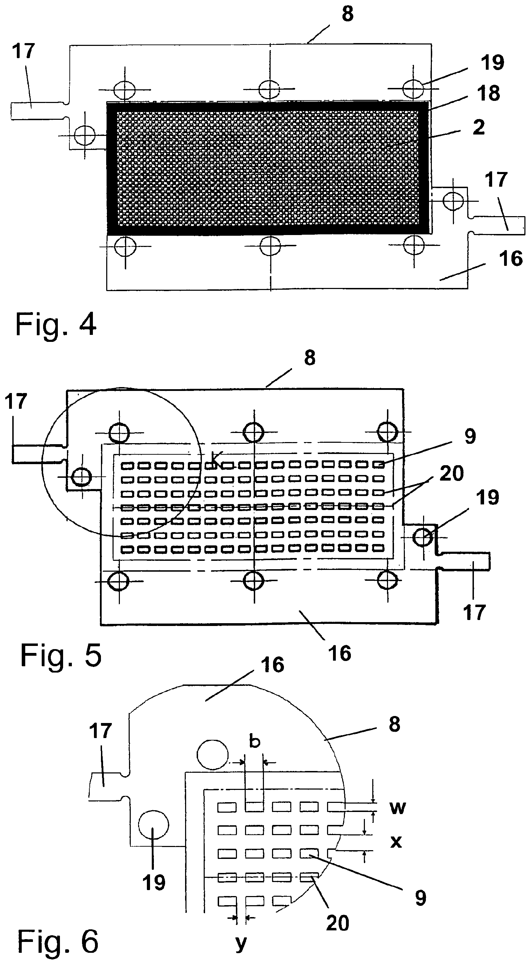

In Figur 4 ist eine Zusatzschicht (8) und eine Elektroden-Membraneinheit (2) einer Brennstoffzelle hier vorgeschlagener Art schematisch dargestellt. Zu erkennen ist ferner eine kühlrippenartige Verbreiterung (16) der Zusatzschicht (8), die durch ein Metallblech gegeben ist, über die Elektroden-Membraneinheit (2) hinaus. Die Elektroden-Membran-Einheit wird von einem Dichtungsrahmen (18) umgrenzt.

Ferner weist die Zusatzschicht (8) Bohrungen (19) auf für Bolzen, mit denen die Zusatzschicht innerhalb eines Brennstoffzellenstapels verschraubt werden kann. An Rändern der Zusatzschicht (8) sind Verbindungselement (20) angeordnet für eine Serienverschaltung von Brennstoffzellen bzw. für eine Ankontaktierung an einen externen Stromkreis.

Die in den Figuren 5 bis 10 dargestellten Zusatzschichten unterscheiden sich von der in Figur 4 gezeigten Zusatzschicht (8) und untereinander lediglich durch die mittleren Durchmesser und Abstände der Belüftungslöcher sowie deren Anordnungen auf den jeweiligen Zusatzschichten.

So haben die Belüftungslöcher (9) der in Figur 5 und 6 schematisch dargestellten Zusatzschicht (8), wobei Figur 6 einen Ausschnitt der in Figur 5 gezeigten Zusatzschicht (8) darstellt, eine mittlere Breite (w) von 1 mm, vergleiche Größe w in Figur 6, und eine Länge (b) von etwa 3 mm. Eine Querschnittsfläche der Belüftungslöcher beträgt etwa 3 mm². Die Belüftungslöcher sind in Reihen (20) angeordnet, wobei ein Reihenabstand 3 mm beträgt, vgl. Größe x in Figur 6. Ein Abdeckungsgrad der gezeigten Zusatzschicht (8) beträgt etwa 75%.

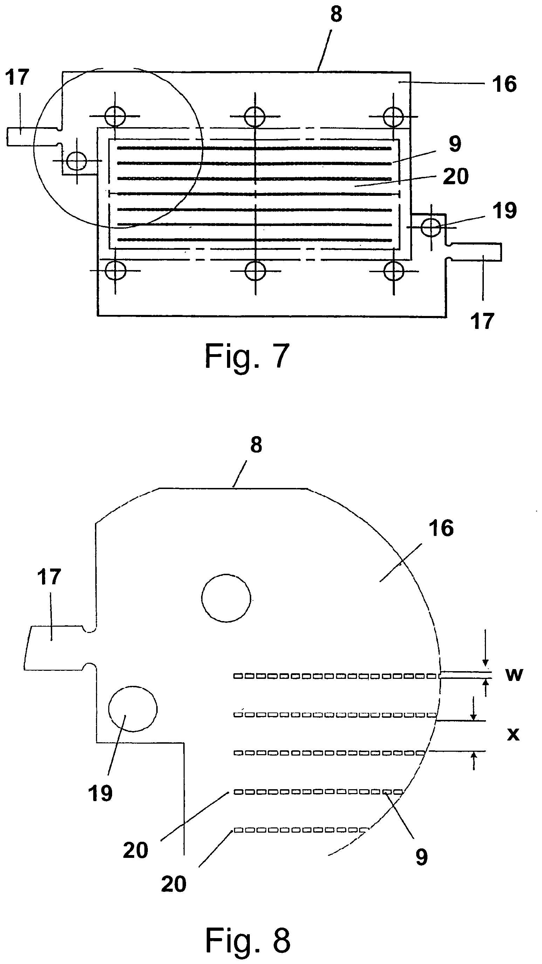

Die kreisrunden Belüftungslöcher (9) der in Figur 7 und 8 schematisch dargestellten Zusatzschicht (8), wobei wiederum Figur 8 einen Ausschnitt der in Figur 7 gezeigten Zusatzschicht (8) darstellt, haben einen mittleren Durchmesser von 0,3 mm, vergleiche Größe w in Figur 8. Eine Querschnittsfläche der Belüftungslöcher beträgt etwa 0,3 mm². Die Belüftungslöcher sind wiederum in Reihen (20) angeordnet, wobei ein Reihenabstand 3 mm beträgt, vgl. Größe x in Figur 8. Ein Abdeckungsgrad der gezeigten Zusatzschicht (8) beträgt etwa 90%.

Die Belüftungslöcher (9) der in Figur 9 und 10 schematisch dargestellten Zusatzschicht (8), wobei wiederum Figur 10 einen Ausschnitt der in Figur 9 gezeigten Zusatzschicht (8) darstellt, haben einen mittleren Durchmesser von 1 mm, vergleiche Größe d in Figur 10. Eine Querschnittsfläche der kreisrunden Belüftungslöcher beträgt etwa 0,8 mm². Die Belüftungslöcher sind mit einem mittleren Abstand zweier benachbarter Belüftungslöcher von etwa 4 mm angeordnet, vgl. Größe x in Figur 8. Ein Abdeckungsgrad der gezeigten Zusatzschicht (8) beträgt etwa 90%.

In Figur 11 ist ein Brennstoffzellenstapel (21) hier vorgeschlagener Art dargestellt. Gezeigt sind vier Bi-Brennstoffzellen (22), welche jeweils zwei Brennstoffzellen hier vorgeschlagener Art umfassen, die jeweils so relativ zueinander angeordnet sind, dass die beiden Kathoden (hier nicht sichtbar) der Brennstoffzellen nach außen gerichtet sind. An den Kathoden sind jeweils Zusatzschichten (8) mit Belüftungslöchern (hier nicht sichtbar) oben beschriebener Art angeordnet. Zwischen benachbarten Bi-Brennstoffzellen ist jeweils eine Separatorstruktur angeordnet, welche als Belüftungselement für die Kathoden der angrenzenden Kathoden ausgestaltet ist. Ferner weisen die Zusatzschichten (8) der äußeren Brennstoffzellen (22) (also die oberen und unteren Brennstoffzellen) des Brennstoffzellenstapels (21) einen kleineren Abdeckungsgrad auf als die Zusatzschichten (8) innerer Brennstoffzellen (21) des Brennstoffzellenstapels (21) (also die mittleren Brennstoffzellen). Weitere Details zu derartigen Bauweisen von Brennstoffzellestapeln mit Separatorstrukturen sind der Druckschrift DE 10 2007 007 704 A1 zu entnehmen.

Alternativ ist es natürlich auch möglich, anstelle derartiger Separatorstrukturen herkömmliche Bipolarplatten zu verwenden.

In Figuren 12 bis 14 sind diagrammatische Darstellungen der Betriebseigenschaften einer Brennstoffzelle hier vorgeschlagener Art innerhalb eines Brennstoffzellenstapels mit fünf weiteren identischen Brennstoffzellen gezeigt. Dabei weisen die Brennstoffzellen Zusatzschichten auf wie anhand von Figuren 7 und 8 beschrieben. Dabei wird insbesondere der stark nichttriviale Zusammenhang zwischen der Zellspannung, der Impedanz und der Leistungsdichte von dem Reihenabstand (x) zwischen den Reihen der Belüftungslöcher, vergleiche Größe x in Figur 8 deutlich. Die Breite (w) der Belüftungslöcher ist bei 0,3 mm, die Länge (b) bei etwa 2 mm, die Abstände (y) innerhalb der Reihen bei etwa 0,5 mm konstant gehalten. In allen Fällen sind die Kathoden ausschließlich mittels natürlicher Konvektion passiv belüftet. Eine Kerntemperatur des Brennstoffzellenstapels liegt immer deutlich über der Umgebungstemperatur.

Figur 12 zeigt eine diagrammatische Darstellung einer Zellspannung der genannten Brennstoffzelle in Abhängigkeit von einer Stromdichte für verschiedene Reihenabstände zwischen den Belüftungslöchern, wobei der Abstand (x) zwischen den Reihen der Belüftungslöcher, vgl. Größe x in Figur 8, zwischen den Werten 0,4 mm, 1,9 mm, 3,0 mm, 3,8 mm, 4,7 mm und 6,3 mm variiert wird. Die Umgebungstemperatur beträgt 25° C und die relative Luftfeuchte 35%. Dargestellt ist die Zellspannung einer Mittelzelle des Brennstoffzellenstapels.

Man erkennt einen Anstieg der Zellspannung mit zunehmendem Abstand zwischen den Reihen der Belüftungslöcher. Dies ist vor allem auf eine abnehmende Impedanz der Brennstoffzelle mit zunehmendem Reihenabstand zurückzuführen, vgl. Figur 13. Bei kleinen Abständen kommen außerdem höhere elektrische Verluste (in der Gasdiffusionsschicht, durch Kontaktwiderstände und Stromableiter) hinzu. Ab ungefähr 330 mA/cm² fällt die Zellspannung bei großen Reihenabständen besonders stark ab, da es hier vermehrt zu einer lokalen Sauerstoffverarmung an der Kathode in Bereichen zwischen den Reihen der Belüftungslöcher kommt. Diese führt zu einer inhomogenen Stromdichteverteilung der Brennstoffzelle bei großen Reihenabständen und Stromdichten. Dahingegen bleibt die Zellspannung bei kleineren Reihenabständen vergleichsweise stabil.

In Figur 13 ist eine diagrammatische Darstellung der Abhängigkeit der Impedanz der genannten Brennstoffzelle von dem Reihenabstand der Belüftungslöcher für verschiedene Umgebungstemperaturen gezeigt bei einer stationären Stromdichte von 300 mA/cm². Es zeigt sich ein Impedanzabfall mit zunehmendem Reihenabstand, der umso ausgeprägter ist, je höher die Umgebungstemperatur ist. Dabei bedeutet eine hohe Impedanz eine geringe Membranfeuchte. Offenbar lässt sich also eine besonders hohe Membranfeuchte bei Temperaturen zwischen 10 und 25 Grad erzielen bei einem Reihenabstand größer als 2 mm.

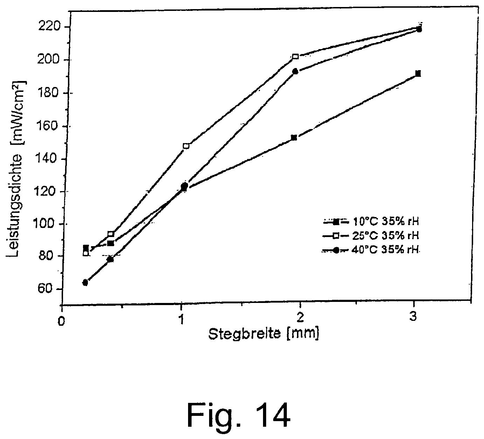

Figur 14 zeigt eine diagrammatische Darstellung einer Leistungsdichte der genannten Brennstoffzelle in Abhängigkeit von dem Reihenabstand zwischen den Belüftungslöchern für verschiedene Umgebungstemperaturen bei einem Arbeitspunkt von 650 mV. Es zeigt sich, dass die Leistungsdichte bei allen betrachteten Temperaturen mit größer werdenden Reihenabständen zwischen den Lüftungslöchern stark zunimmt.

Es können also die Eigenschaften der erfindungsgemäßen Brennstoffzelle durch die Wahl der Größe und insbesondere des Abstands zwischen den Belüftungsöffnungen für verschiedene Leistungsbereiche optimiert werden und an gegebene Betriebsbedingungen angepasst werden.

Bei Abständen zwischen den Belüftungslöchern von über 3 mm verschlechtert sich die Brennstoffzellenleistung bei einem Arbeitspunkt von 650 mV, was an einem Abknicken nach unten der in Figur 12 gezeigten Kurven bei immer kleineren stromdichten erkennbar ist. Ein Vorteil bei Abständen größer als 3 mm ergibt sich nur, wenn von vornherein der Arbeitspunkt auf eine sehr hohe Spannung (z.B. etwa 0,8 V oder höher) und geringe Stromdichten (< 100 mA/cm²) gelegt wird. Dies kann durchaus sinnvoll sein, da dann ein sehr guter Brennstoffzellenwirkungsgrad vorhanden ist und eine verbesserte Langzeitstabilität. Außerdem können die größeren Abstände beim Impulsbetrieb geeignet sein. Soll der Arbeitspunkt eher bei hohen Stromdichten liegen (z. B. etwa 400 mA/cm² oder mehr), so kann nur ein geringerer Abstand zwischen den Belüftungslöchern und ein kleinerer Abdeckungsgrad verwendet werden.

Beim Vergleich der Kurven der Zellspannung in Figur 12 für 0,4 mm und 1,9 mm Reihenabstand erkennt man, dass hier bei hohen Stromdichten der Reihenabstand von 1,9 mm eine deutlich höhere Spannung und damit auch Leistung bringt. Muss die Brennstoffzelle auch bei sehr hoher Luftfeuchte betrieben werden, ist tendenziell auch ein kleinerer Abstand und ein kleinerer Abdeckungsgrad besser, da hier eher die Gefahr einer Flutung der Brennstoffzelle durch zu viel Wasser und nicht der Austrocknung besteht.

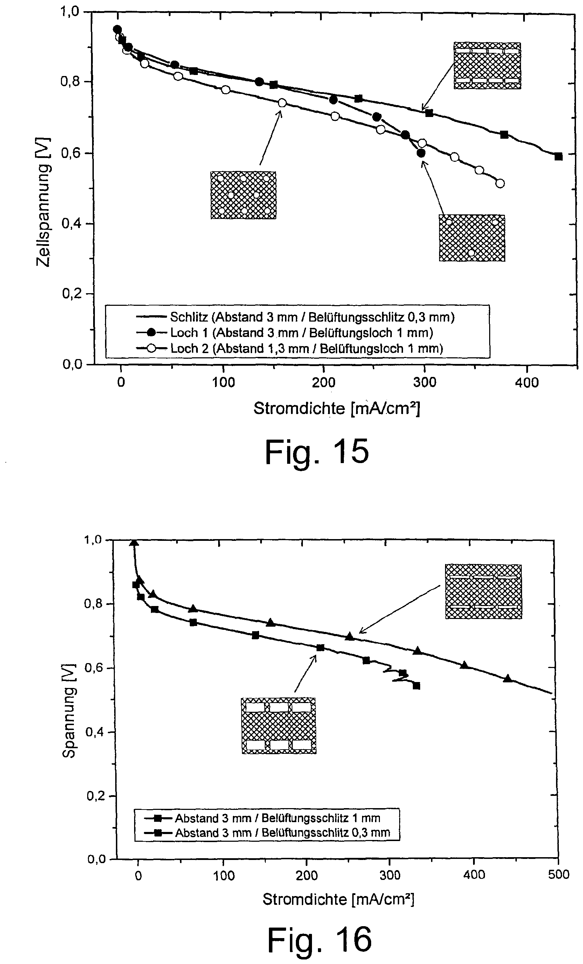

In Figur 15 wird die Abhängigkeit der Zellspannung (in Volt) von der Stromdichte (in mA/cm²) für verschiedene Anordnungen und Formen der Belüftungslöcher gezeigt. Es zeigt sich hier der Vorteil von länglichen, insbesondere schlitzförmigen Belüftungslöchern, die reihenförmig angeordnet und entlang der Reihen ausgerichtet sind, gegenüber kreisrunden oder quadratischen Löchern, die gleichmäßig verteilt angeordnet sind. Werden runde oder quadratische Löcher in relativ geringen Abstand zueinander gleichmäßig über die Zusatzschicht verteilt angeordnet, so erhält man einen relativ geringen Abdeckungsgrad bzw. großes Öffnungsverhältnis. Durch den geringen Abdeckungsgrad liegt ein relativ großer Anteil der Membran direkt unterhalb oder zumindest in der Nähe eines Belüftungslochs. In diesen Bereichen ist der Wassergehalt in der Membran relativ niedrig, so dass die Zellimpedanz insgesamt relativ hoch bzw. die Zellspannung relativ niedrig ist, vgl. Figur 15, Loch 2. Vergrößert man den Lochabstand, um den Abdeckungsgrad zu reduzieren, so spielt das Austrocknen zwar eine geringere Rolle, allerdings kommt es nun bei größeren Strömen zu Einbußen in der Zellspannung, da es nun zu einer Unterversorgung der Zelle mit Sauerstoff oder zu einem zu langsamen Wasseraustrag aus der Zelle und zu Wasseransammlungen in der Gasdiffusionslage kommt, welche die Sauerstoffversorgung durch die Gasdiffusionsschicht zusätzlich verschlechtern. So bricht in diesem Fall die Zellspannung bereits bei niedrigeren Stromdichten (200 mA/cm²) stark ein. Bei reihenförmig angeordneten Belüftungslöchern mit nur kleinen Lochabständen innerhalb der Reihen und großen Abständen zwischen den Reihen lässt sich dahingegen über den gesamten Bereich der Stromdichte die beste Sauerstoffversorgung, Wasseraustragung erreichen und gleichzeitig die Membran vor dem Austrocknen schützen, vgl. Figur 15, Loch 1.

In Figur 16 wird die Abhängigkeit der Zellspannung (in Volt) von der Stromdichte (in mA/cm²) für verschiedene Breiten (w) der reihenartig angeordneten, schlitzförmigen Belüftungslöcher gezeigt. Es zeigt sich, dass Belüftungslöcher mit einer geringen Breite (w) von nur 0,3 mm für die Sauerstoffversorgung selbst bei 500 mA/cm² ausreichend sind. Eine größer Breite (w) verbessert zwar die Sauerstoffversorgung, jedoch verkleinert sich auch gleichzeitig mit dem abdeckungsgrad der Bereich der Membran bzw. der Gasdiffusionsschicht, der direkt unterhalb oder in der Nähe der Belüftungslöcher liegt und lokal austrocknen kann. Dies führt zu einer lokal erhöhten Impedanz und insgesamt zu einer niedrigeren Zellspannung.

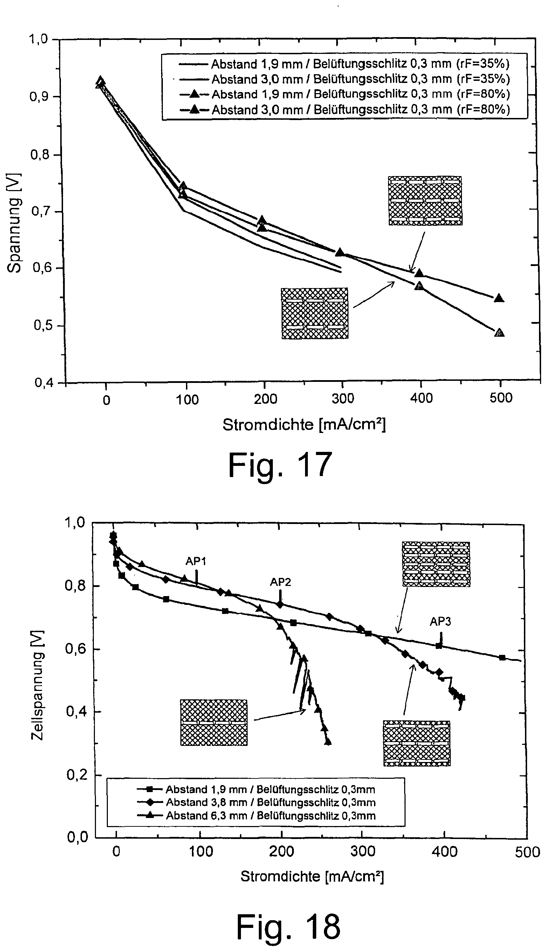

In Figur 17 wird die Abhängigkeit der Zellspannung (in Volt) von der Stromdichte (in mA/cm²) für verschiedene Abstände (x) von Reihen von schlitzförmigen Belüftungslöchern mit konstanter Breite (w) gezeigt. Wie bereits oben diskutiert wurde, erzielen Brennstoffzellen mit größerem Schlitzabstand bei kleineren Stromdichten höhere Zellspannungen, da derartige Brennstoffzellen weniger stark austrocknen. Bei höherer Luftfeuchte jedoch knickt die Zellspannung bei etwas stärker ab als bei Brennstoffzellen mit geringeren Reihenabständen aufgrund von Wasseransammlungen in der Gasdiffusionslage.

In Figur 18 ist die Abhängigkeit der Zellspannung (in Volt) von der Stromdichte (in mA/cm²) für verschiedene Abstände (x) von Reihen von schlitzförmigen Belüftungslöchern mit einer konstanten Breite (w) von 0,3 mm gezeigt. Es zeigt sich, dass bei dem eingezeichneten Arbeitspunkt AP1 bei etwa 400 mA/cm² eine Brennstoffzelle mit einem Reihenabstand (x) von 1,9 mm die höchste Zellspannung erreicht, bei dem Arbeitspunkt AP2 bei etwa 200 mA/cm² eine Brennstoffzelle mit einem Reihenabstand (x) von 3,8 mm die höchste Zellspannung erreicht und bei dem Arbeitspunkt AP3 bei etwa 200 mA/cm² eine Brennstoffzelle mit einem Reihenabstand (x) von 3,8 mm die höchste Zellspannung erreicht. Es zeigt sich also, dass sich durch Ändern alleine des Reihenabstandes (x) die Brennstoffzelle für einen vorbestimmten Arbeitspunkt optimieren lässt.

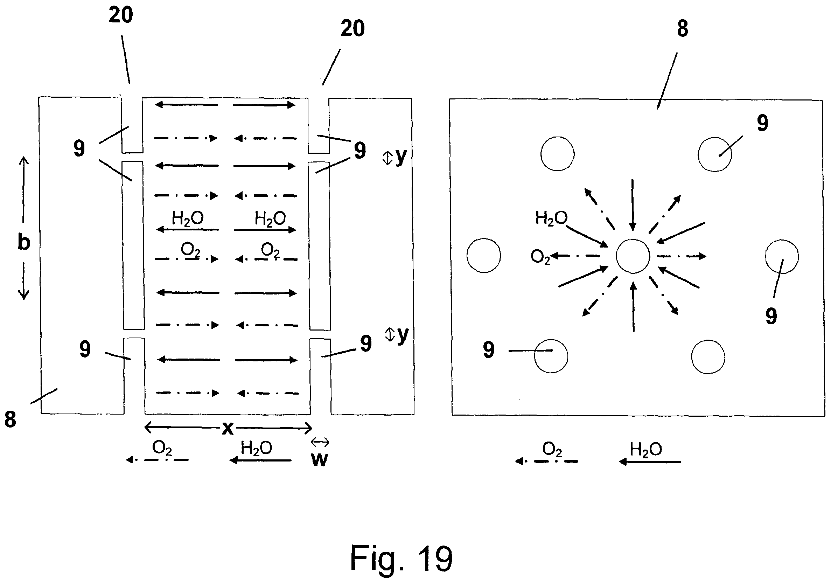

In Figur 19 sind Diffusionswege der Reaktanden Sauerstoff (strichpunktierte Pfeile) und Wasser (durchgezogene Pfeile) in zwei unterschiedlichen Brennstoffzellen dargestellt, wie sie beispielsweise in den Figuren 1 bis 10 gezeigt sind. Im Fall von länglichen und in nebeneinander liegenden Reihen 20 angeordneten und entlang dieser Reihen 20 ausgerichteten Belüftungslöchern 9 mit kleinen Abständen (y) zwischen Belüftungslöchern innerhalb der Reihen, siehe rechte Seite der Figur 19, sind die Diffusionswege im Wesentlichen parallel bzw. antiparallel zueinander ausgerichtet. Dies führt zu im Wesentlichen eindimensionalen und besonders gleichmäßigen Konzentrationsverteilungen der Reaktanden in einer Gasdiffusionsschicht bzw. in der Reaktanden in einer Gasdiffusionsschicht bzw. in einer Membran der Membran-Elektroden-Einheit der Brennstoffzelle. Dies hat den Vorteil einer besonders gleichmäßiger Stromdichteverteilung.

Im Gegensatz hierzu sind im Fall von homogen und isotrop verteilten Belüftungslöchern 9 die bevorzugten Diffusionswege der Reaktanden relativ zu den Belüftungslöchern sternförmig ausgerichtet. Hierdurch kann es in Bereichen zwischen den Belüftungslöchern 9 zu höheren Wasserkonzentrationen und geringeren Sauerstoffkonzentrationen kommen.

### Bezugszeichenliste:

- 1.: Brennstoffzelle
- 2.: Elektroden-Membran-Einheit
- 3.: Membran
- 4.: Anode
- 5.: Kathode
- 6.: Mikroporöse Schicht
- 7.: Gasdiffusionsschicht
- 8.: Zusatzschicht
- 9.: Belüftungsloch in Zusatzschicht
- 10.: Belüftungselement
- 11.: Steg
- 12.: Belüftungskanal
- 13.: Mikrostrukturen
- 14.: verschiebbare Zwischenschicht
- 15.: Belüftungsloch in Zwischenschicht
- 16.: Kühlrippe
- 17.: Verbindungselement
- 18.: Dichtungsrahmen
- 19.: Bohrung
- 20.: Reihe von Belüftungslöchern
- 21.: Brennstoffzellenstapel
- 22.: Bi-Brennstoffzelle
- 23.: Separatorstruktur

## Patentansprüche

1. Brennstoffzelle (1), insbesondere eine Wasserstoff-Brennstoffzelle (1), mit einer Elektroden-Membran-Einheit (2) und einer auf einer Kathodenseite der Elektroden-Membran-Einheit (2) angeordneten Zusatzschicht (8), die eine Vielzahl von länglichen Belüftungslöchern (9) zur Belüftung der Elektroden-Membran-Einheit (2) aufweist, wobei die Belüftungslöcher in mehreren nebeneinander liegenden Reihen (20) angeordnet und jeweils längs der Reihen (20) orientiert sind, wobei
- eine Länge (b) jedes dieser Belüftungslöcher (9) mindestens dreimal so groß ist wie eine Breite (w) des jeweiligen Belüftungslochs (9),
- wobei innerhalb einer jeden der Reihen (20) zwischen einem jeden Paar benachbarter Belüftungslöcher (9) der Reihe (20) jeweils ein Abstand (y) besteht, der maximal ein Drittel der Länge (b) jedes dieser beiden Belüftungslöcher (20) beträgt,
- wobei ein Reihenabstand (x) zwischen einem jeden Paar benachbarter Reihen (20) mindestens dreimal größer ist als jeder der genannten Abstände (y) zwischen benachbarten Belüftungslöchern (9) dieser beiden Reihen (20),
**dadurch gekennzeichnet,**
**dass** der Reihenabstand (x) zwischen einem jeden Paar benachbarter Reihen (20) mindestens dreimal größer ist als die Breiten (w) der Belüftungslöcher dieser beiden Reihen (20), wobei die Zusatzschicht (8) als kathodischer Stromableiter ausgestaltet ist.

2. Brennstoffzelle (1) nach Anspruch 1, **dadurch gekennzeichnet, dass** die Längen (b) der Belüftungslöcher (9) jeweils in einem Bereich zwischen 1 mm und 50 mm liegen und/oder dass die Breiten (w) der Belüftungslöcher (9) jeweils in einem Bereich zwischen 0,2 mm bis 1 mm liegen.

3. Brennstoffzelle (1) nach einem der vorangehenden Ansprüche, **dadurch gekennzeichnet, dass** innerhalb jeder der Reihen (20) von Belüftungslöchern (9) der Abstand (y) zwischen jedem Paar benachbarter Belüftungslöcher (9) der Reihe (20) jeweils in einem Bereich zwischen 0 mm und 2 mm liegt und/oder dass der Abstand (x) zwischen einem jeden Paar benachbarter Reihen (20) der Belüftungslöcher (9) zwischen 0,6 mm und 10 mm liegt.

4. Brennstoffzelle (1) nach einem der vorangehenden Ansprüche, **dadurch gekennzeichnet,**
**dass** bei einer Auslegung der Brennstoffzelle (1) für einen Impulsbetrieb der Abstand (x) zwischen jedem Paar der Reihen (20) der Belüftungslöcher (9) zwischen 6 mm und 10 mm liegt,
bei einer Auslegung der Brennstoffzelle (1) für einen Betrieb bei einer hohen Spannung und einer geringen Leistungsdichte der Abstand (x) zwischen jedem Paar der Reihen (20) der Belüftungslöcher (9) zwischen 3 mm und 6 mm liegt,
oder bei einer Auslegung der Brennstoffzelle (1) für einen Betrieb nahe eines Leistungsmaximums der Abstand (x) zwischen jedem Paar der Reihen (20) der Belüftungslöcher (9) zwischen 0,6 mm und 4 mm liegt.

5. Brennstoffzelle (1) nach einem der vorangehenden Ansprüche, **dadurch gekennzeichnet, dass** zwischen der Elektroden-Membran-Einheit (2) und der Zusatzschicht (8) eine Gasdiffusionsschicht (7) angeordnet ist.

6. Brennstoffzelle (1) nach Anspruch 5, **dadurch gekennzeichnet, dass** der Reihenabstand (x) zwischen jedem Paar benachbarter Reihen (20) von Belüftungslöchern (20) mindestens viermal so groß ist wie eine Dicke (d) der Gasdiffusionsschicht (7) und/oder dass der genannte Reichenabstand (x) kleiner ist als ein Fünfunddreißigfaches der Dicke (d) der Gasdiffusionsschicht (7).

7. Brennstoffzelle (1) nach einem der vorangehenden Ansprüche, **dadurch gekennzeichnet, dass** zwischen der Elektroden-Membran-Einheit (2) und der Zusatzschicht (8) oder auf einer der Elektroden-Membran-Einheit (2) abgewandten Seite der Zusatzschicht (8) eine Zwischenschicht (14) mit Belüftungslöchern (15) angeordnet ist, welche relativ zur Zusatzschicht (8) verschiebbar ist.

8. Brennstoffzelle (1) nach einem der vorangehenden Ansprüche, **dadurch gekennzeichnet, dass** die Brennstoffzelle (1) ein auf der Kathodenseite der Elektroden-Membran-Einheit (2) angeordnetes Belüftungselement (10) umfasst, das auf einer der Elektroden-Membran-Einheit (2) zugewandten Seite Stege (11) aufweist zur Ausbildung von auf einer der Elektroden-Membran-Einheit (2) abgewandten Seite der Zusatzschicht (8) angeordneten Belüftungskanälen (12).

9. Brennstoffzelle (1) nach Anspruch 8, **dadurch gekennzeichnet, dass** die Zusatzschicht (8) durch verbreiterte, der Elektroden-Membran-Einheit (2) zugewandte Endstücke der Stege (11) des Belüftungselements (10) ausgebildet ist.

10. Brennstoffzelle (1) nach einem der Ansprüche 8 oder 9, **dadurch gekennzeichnet, dass** eine Querschnittsfläche der Belüftungskanäle (12) zwischen 1 mm² und 50 mm² beträgt.

11. Brennstoffzellenstapel (21), umfassend mindestens zwei Brennstoffzellen (1) nach einem der Ansprüche 1 bis 10.

12. Brennstoffzellenstapel (21) nach Anspruch 11, wobei die Zusatzschichten (8) äußerer Brennstoffzellen (1) des Brennstoffzellenstapels (21) einen kleineren Abdeckungsgrad aufweisen als die Zusatzschichten (8) innerer Brennstoffzellen (1) des Brennstoffzellenstapels (21).

13. Flugzeug, insbesondere ein unbemanntes Flugzeug, umfassend eine Brennstoffzellen (1) nach einem der Ansprüche 1 bis 10 oder umfassend einen Brennstoffzellenstapel (21) nach einem der Ansprüche 11 oder 12.

14. Portables Gerät, insbesondere ein Laptop oder ein Mobilfunkgerät, umfassend eine Brennstoffzelle (1) nach einem der Ansprüche 1 bis 10 oder umfassend einen Brennstoffzellenstapel nach einem der Ansprüche 11 oder 12.

## Claims

1. A fuel cell (1), in particular a hydrogen fuel cell (1), comprising a membrane electrode assembly (2) and an additional layer (8), which is arranged on a cathode side of the membrane electrode assembly (2) and comprises a plurality of elongated ventilation holes (9) for ventilating the membrane electrode assembly (2), the ventilation holes being arranged in a plurality of juxtaposed rows (20) and oriented along the rows (20),
- a length (b) of each of these ventilation holes (9) being at least three times as large as a width (w) of the respective ventilation hole (9),
- within each of the rows (20), a respective distance (y) that is no more than one third of the length (b) of each of these two ventilation holes (20) being present between each pair of adjoining ventilation holes (9) of the row (20),
- a row distance (x) between each pair of adjoining rows (20) being at least three times larger than each of said distances (y) between adjoining ventilation holes (9) of these two rows (20),
**characterized in that**
the row distance (x) between each pair of adjoining rows (20) is at least three times larger than the widths (w) of the ventilation holes of these two rows (20), the additional layer (8) being designed as a cathodic current conductor.

2. The fuel cell (1) according to claim 1, **characterized in that** the respective lengths (b) of the ventilation holes (9) are in a range between 1 mm and 50 mm and/or that the respective widths (w) of the ventilation holes (9) are in a range between 0.2 mm and 1 mm.

3. The fuel cell (1) according to any one of the preceding claims, **characterized in that**, within each of the rows (20) of ventilation holes (9), the respective distance (y) between each pair of adjoining ventilation holes (9) of the row (20) is in a range between 0 mm and 2 mm and/or that the distance (x) between each pair of adjoining rows (20) of the ventilation holes (9) is between 0.6 mm and 10 mm.

4. The fuel cell (1) according to any one of the preceding claims, **characterized in that**
the distance (x) between each pair of the rows (20) of ventilation holes (9) is between 6 mm and 10 mm when the fuel cell (1) is designed for pulsed operation,
the distance (x) between each pair of the rows (20) of ventilation holes (9) is between 3 mm and 6 mm when the fuel cell (1) is designed for operation at a high voltage and low power density,
or the distance (x) between each pair of the rows (20) of ventilation holes (9) is between 0.6 mm and 4 mm when the fuel cell (1) is designed for operation close to a performance maximum.

5. The fuel cell (1) according to any one of the preceding claims, **characterized in that** a gas diffusion layer (7) is arranged between the membrane electrode assembly (2) and the additional layer (8).

6. The fuel cell (1) according to claim 5, **characterized in that** the row distance (x) between each pair of adjoining rows (20) of ventilation holes (20) is at least four times as large as the thickness (d) of the gas diffusion layer (7) and/or that said row distance (x) is smaller than one thirty-fifth of the thickness (d) of the gas diffusion layer (7).

7. The fuel cell (1) according to any one of the preceding claims, **characterized in that** an intermediate layer (14) comprising ventilation holes (15), which can be displaced relative to the additional layer (8), is arranged between the membrane electrode assembly (2) and the additional layer (8) or on a side of the additional layer (8) facing away from the membrane electrode assembly (2).

8. The fuel cell (1) according to any one of the preceding claims, **characterized in that** the fuel cell (1) comprises a ventilation element (10), which is arranged on the cathode side of the membrane electrode assembly (2) and comprises webs (11) on a side facing the membrane electrode assembly (2) for forming ventilation channels (12) arranged on a side of the additional layer (8) facing away from the membrane electrode assembly (2).

9. The fuel cell (1) according to claim 8, **characterized in that** the additional layer (8) is formed by widened end pieces of the webs (11) of the ventilation element (10) which face the membrane electrode assembly (2).

10. The fuel cell (1) according to claim 8 or 9, **characterized in that** a cross-sectional surface of the ventilation channels (12) is between 1 mm² and 50 mm².

11. A fuel cell stack (21), comprising at least two fuel cells (1) according to any one of claims 1 to 10.

12. The fuel cell stack (21) according to claim 11, wherein the additional layers (8) of outer fuel cells (1) of the fuel cell stack (21) have a smaller degree of coverage than the additional layers (8) of inner fuel cells (1) of the fuel cell stack (21).

13. An aircraft, in particular an unmanned aircraft, comprising a fuel cell (1) according to any one of claims 1 to 10 or comprising a fuel cell stack (21) according to claim 11 or 12.

14. A portable device, in particular a laptop or a mobile communication device, comprising a fuel cell (1) according to any one of claims 1 to 10 or comprising a fuel cell stack according to claim 11 or 12.

## Revendications

1. Pile à combustible (1), plus particulièrement une pile à combustible à hydrogène (1), avec une unité électrodes-membrane (2) et une couche supplémentaire (8) disposée sur un côté cathodique de l'unité électrodes-membrane (2), qui comprend une pluralité de trous de ventilation allongés (9) pour la ventilation de l'unité électrodes-membrane (2), les trous de ventilation étant disposés en plusieurs rangées juxtaposées (20) et orientés le long de ces rangées (20),
- une longueur (b) de chacun de ces trous de ventilation (9) étant au moins trois fois plus grande qu'une largeur (w) du trou de ventilation (9) correspondant,
- à l'intérieur de chacune des rangées (20), entre une paire de trous de ventilation adjacents (9) de la rangée (20), une distance (y) existant, qui représente au maximum un tiers de la longueur (b) de chacun de ces deux trous de ventilation (20),
- une distance entre les rangées (x) entre chaque paire de rangées adjacentes (20) étant au moins trois fois plus grande que chacune des distances (y) mentionnées entre des trous de ventilation (9) adjacents de ces deux rangées (20),
**caractérisée en ce que**
la distance entre les rangées (x) entre chaque paire de rangées (20) adjacentes est au moins trois fois plus grande que la largeur (w) des trous de ventilation de ces deux rangées (20), la couche supplémentaire (8) étant conçue comme un collecteur de courant.

2. Pile à combustible (1) selon la revendication 1, **caractérisée en ce que** les longueurs (b) des trous de ventilation (9) se trouvent chacun dans un intervalle entre 1 mm et 50 mm et/ou **en ce que** les largeurs (w) des trous de ventilation (9) se trouvent chacun dans un intervalle entre 0,2 mm et 1 mm.

3. Pile à combustible (1) selon l'une des revendications précédentes, **caractérisée en ce que**, à l'intérieur de chacune des rangées (20) de trous de ventilations (9), la distance (y) entre chaque paire de trous de ventilation (9) adjacents de la rangée (20) se trouve dans un intervalle entre 0 mm et 2 mm et/ou **en ce que** la distance (x) entre chaque paire de rangées (20) adjacentes des trous de ventilation (9) se trouve entre 0,6 mm et 10 mm.

4. Pile à combustible (1) selon l'une des revendications précédentes, **caractérisée en ce que**
lors d'une conception de la pile à combustible (1) pour un fonctionnement par impulsions, la distance (x) entre chaque paire de rangées (20) de trous de ventilation (9) se trouve entre 6 mm et 10 mm,
lors d'une conception de la pile à combustible (1) pour un fonctionnement à une tension élevée et une faible densité de puissance, la distance (x) entre chaque paire de rangées (20) de trous de ventilation (9) se trouve entre 3 mm et 6 mm,
ou lors d'une conception de la pile à combustible (1) pour un fonctionnement proche d'un maximum de puissance, la distance (x) entre chaque paire de rangées (20) de trous de ventilation (9) se trouve entre 0,6 mm et 4 mm.

5. Pile à combustible (1) selon l'une des revendications précédentes, **caractérisée en ce que**, entre l'unité électrodes-membrane (2) et la couche supplémentaire (8), est disposée une couche de diffusion de gaz (7).

6. Pile à combustible (1) selon la revendication 5, **caractérisée en ce que** la distance entre les rangées (x) entre chaque paire de rangées (20) adjacentes de trous de ventilation (20) est au moins quatre fois plus grande qu'une épaisseur (d) de la couche de diffusion de gaz (7) et/ou **en ce que** la distance entre les rangées (x) mentionnée est inférieure à trente-cinq fois l'épaisseur (d) de la couche de diffusion de gaz (7).

7. Pile à combustible (1) selon l'une des revendications précédentes, **caractérisée en ce que**, entre l'unité électrodes-membrane (2) et la couche supplémentaire (8) ou sur un côté de la couche supplémentaire (8) opposé à l'unité électrodes-membrane (2), est disposée une couche intermédiaire (14) avec des trous de ventilation (15), qui peut être déplacée par rapport à la couche supplémentaire (8).

8. Pile à combustible (1) selon l'une des revendications précédentes, **caractérisée en ce que** la pile à combustible (1) comprend un élément de ventilation (10) disposé sur le côté cathodique de l'unité électrodes-membrane (2), qui comprend, sur un côté orienté vers l'unité électrodes-membrane (2), des nervures (11) pour la formation de canaux de ventilation (12) disposés sur un côté de la couche supplémentaire (8) orienté vers l'unité électrodes-membrane (2).

9. Pile à combustible (1) selon la revendication 8, **caractérisée en ce que** la couche supplémentaire (8) est constituée de pièces d'extrémité, élargies et orientées vers l'unité électrodes-membrane (2), des nervures (11) de l'élément de ventilation (10).

10. Pile à combustible (1) selon l'une des revendications 8 ou 9, **caractérisée en ce qu'**une surface de section des canaux de ventilation (12) est de 1 mm² à 50 mm².

11. Empilement de piles à combustible (21), comprenant au moins deux piles à combustible (1) selon l'une des revendications 1 à 10.

12. Empilement de piles à combustible (21) selon la revendication 11, les couches supplémentaires (8) de piles à combustible (1) extérieures de l'empilement de piles à combustible (21) présentant un degré de recouvrement plus petit que les couches supplémentaires (8) des piles à combustible (1) intérieures de l'empilement de piles à combustible (21).

13. Avion, plus particulièrement avion sans équipage, comprenant des piles à combustible (1) selon l'une des revendications 1 à 10 ou comprenant un empilement de piles à combustible (21) selon l'une des revendications 11 ou 12.

14. Appareil portable, plus particulièrement un ordinateur portable ou un appareil de radiotéléphonie mobile, comprenant une pile à combustible (1) selon l'une des revendications 1 à 10 ou comprenant un empilement de piles à combustible selon l'une des revendications 11 ou 12.
